# EUROPÄISCHE PATENTSCHRIFT

(11) **EP 1 472 162 B1**
(45) Veröffentlichungstag und Bekanntmachung des Hinweises auf die Patenterteilung: **04.10.2006**
(21) Anmeldenummer: 03729241.4
(22) Anmeldetag: 10.01.2003
(51) Int. Cl.: B65G 47/71

(54) **VORRICHTUNG ZUM ORTSGENAUEN ABLEGEN VON GEGENSTÄNDEN**
DEVICE FOR DEPOSITING OBJECTS ON AN EXACT SPOT
DISPOSITIF POUR DÉPOSER DES OBJETS À UN ENDROIT PRÉCIS

(30) Priorität: 14.01.2002 DE 10201182
(43) Veröffentlichungstag der Anmeldung: 03.11.2004
(60) Teilanmeldung: 06005477.2
(73) Patentinhaber: CFS Bühl GmbH, 87437 Kempten (DE)
(72) Erfinder: MAYER, Josef, 87766 Memmingerberg (DE)
(74) Vertreter: Wolff, Felix
(86) Internationale Anmeldenummer: PCT/EP2003/000179
(87) Internationale Veröffentlichungsnummer: WO 2003/057602

(56) Entgegenhaltungen:
- EP-A- 0 104 142
- EP-A- 0 186 986
- EP-A- 0 798 242
- DE-A- 2 516 583
- US-A- 4 684 008

## Beschreibung

Die vorliegende Erfindung betrifft eine Vorrichtung zur Erzeugung beliebiger Portionen und Formate von Produkten, mit einem Aufreihband, das die Produkte fördert und an einer Übergabekante an ein Portionierband übergibt, auf dem die Portionen und/oder die Formate erzeugt werden und mit dem die Portionen in dem entsprechenden Formate weiter gefördert werden. Des weiteren betrifft die vorliegende Erfindung ein System bestehend aus der erfindungsgemäßen Vorrichtung und einer Verpackungsmaschine sowie ein Verfahren zur Erzeugung beliebiger Portionen und Formaten von Produkten.

Positioniersysteme für das Positionieren von Produkten, beispielsweise Lebensmitteln, sonstigen Gütern und dergleichen sind beispielsweise aus der US-A-684 008 und der EP-A-0 104 142 bekannt. Die Produkte werden dabei von einem Förderband beispielsweise an eine Verpackungslinie übergeben. Da diese Verpackungsanlagen heutzutage mehrreihig ausgeführt sind, muss ein ankommender Produktstrom zunächst in die Anzahl von Produktströmen zerteilt werden, die der Anzahl von Produktreihen der Verpackungslinie entspricht. Eine Verteilung eines einstreifigen Produktstromes auf eine mehrreihige Verpackungslinie ist derzeit dann möglich, wenn die gleiche Anzahl von Förderbändern mit ankommenden Produkten parallel über der jeweiligen Reihe der Verpackungslinie angeordnet ist, durch die die einzeinen Produkte oder Produktstapel dann in die jeweilige Reihe der Verpackungslinie eingelegt beziehungsweise von dem Förderband abgeworfen werden.

Der anlagentechnische Aufwand dazu ist sehr hoch. Zudem ist die Reihenfolge der Ablage der einzelnen Produktstapel nicht oder nur mit erheblichem Aufwand variierbar. Bei einem Formatwechsels in der Verpackungsmaschine, beispielsweise von drei auf vier Reihen, muss ein erheblicher, anlagentechnischer Aufwand betrieben werden, bevor die Produkte in einer Verpackungslinie positioniert werden können.

Es stellt sich deshalb die Aufgabe eine Vorrichtung zur Erzeugung beliebiger Portionen und Formate zur Verfügung zu stellen, die die Nachteile des Standes der Technik nicht aufweist.

Gelöst wird die Aufgabe erfindungsgemäß, durch die Merkmale des Patentanspruchs 1. Bevorzugte Ausführungsformen der vorliegenden Erfindung sind Gegenstand der Unteransprüche.

Eine Portion im Sinne der Erfindung ist jede Anordnung, in der Produkte, insbesondere Lebensmittel, in einem bestimmten Portionsbild arrangiert werden. Beispielhaft jedoch nicht einschränkend für mögliche Portionsbilder seien hier der Stapel, der Schindel in Längs- und in Querrichtung jeweils mit und ohne Überlappung, Zick-Zack-Muster sowie die terrassenförmige Reihe genannt.

Ein Format im Sinne der Erfindung ist die Anordnung, die die einzelnen Portionen zueinander einnehmen. In der Regel richtet sich das Format der Portionen nach der Anordnung der Verpackungsmulden einer nachfolgenden Verpackungsmaschine, in die die Portionen abgelegt werden und/oder dem Takt, mit dem die Verpackungsmulden weitertransportiert werden. Vorzugsweise werden die Produkte in parallelen Produktreihen abgelegt.

Erfindungsgemäß wird eine Vorrichtung zur Erzeugung beliebiger Portionen und Formate zur Verfügung gestellt, die aus einem Aufreihband und einem Portionierband besteht. Mit dem Aufreihband werden die Produkte gefördert und an einer Übergabekante an das Portionierband übergeben. Auf dem Portionierband werden die jeweils gewünschten Portionen bzw. Formate erzeugt. Weiterhin erfindungsgemäß kann die Lage der Übergabekante in mindestes einer Richtung und relativ zu dem Portionierband und/oder die Lage des Portionierbandes in mindestens einer Richtung und relativ zu der Übergabekante verändert werden, wobei die Lage der Übergabekante und die Bewegung des Portionierbandes so aufeinander abgestimmt sind, dass mit den Produkten beliebige Portionen und Formate erzeugbar sind. Mit der erfindungsgemäßen Vorrichtung ist es nunmehr möglich aus einem einstreifigen Förderstrom beliebige Portionen in beliebigen Formaten zu erzeugen.

Als Aufreihband eignet sich jede dem Fachmann geläufige Fördervorrichtung. Vorzugsweise ist das Aufreihband jedoch ein Endlosförderband. Die Veränderung der Lage der Übergabekante des Aufreihbandes kann dadurch erzeugt werden, dass das gesamte Aufreihband relativ zu dem Portionierband verschieblich gelagert ist und/oder dass die Länge des Aufreihbandes beispielsweise durch eine Ausführung als Rückzugs- oder Shuttleband veränderbar ist. Die erfindungsgemäße Vorrichtung kann mehrere Aufreihbänder aufweisen, die vorzugsweise unabhängig voneinander arbeiten. Diese Ausführungsform ist im Vergleich zu einer erfindungsgemäßen Vorrichtung mit nur einem Aufreihband noch flexibler.

Falls die Lage der Übergabekante relativ zu dem Portionierband veränderbar ist, so sollte die Bewegung der Übergabekante vorzugsweise so gestaltet werden, dass die Übergabekante die Breite bzw. die Länge des Portionierbandes so weit überfährt, dass die Produkte unter Berücksichtigung von deren Wurfparabel auf allen möglichen Orten des Portionierbandes abgelegt werden können. Die Geschwindigkeit mit der die Lage der Übergabekante verändert wird, ist vorzugsweise größer als die Transportgeschwindigkeit des Aufreihbandes.

Als Portionierband eignet sich jede dem Fachmann geläufige Vorrichtung auf dem die Produkte in vorbestimmten Portionen und in einem gewissen Formate abgelegt und vorzugsweise weitertransportiert werden können. Das Portionierband kann dann die vom Aufreihband einstreifig ankommenden Produkte mehrstreifig und in dem gewünschten Portionsbild weiterfördern, beispielsweise zu einer Verpackungsmaschine. Vorzugsweise ist das Portionierband ein Endlosband, das vorzugsweise in einem Maschinenrahmen angeordnet ist. Die Veränderung der Lage des Portionierbandes kann dadurch erzeugt werden, dass der gesamte Maschinenrahmen relativ zu der Übergabekante und/oder dass das Portionierband relativ zu dem Maschinenrahmen bewegt wird. Die erfindungsgemäße Vorrichtung kann mehrere Portionierbänder, die vorzugsweise unabhängig voneinander arbeiten, aufweisen.

Falls das Portionierband relativ zu der Übergabekante beweglich ist, so sollte die Bewegung des Portionierbandes vorzugsweise so gestaltet werden, dass die Produkte unter Berücksichtigung von deren Wurfparabel auf allen möglichen Orten des Portionierbandes abgelegt werden können. Die Geschwindigkeit mit der das Portionierband bewegt wird, sollte vorzugsweise größer sein als die Transportgeschwindigkeit des Aufreihbandes.

Das Aufreihband und das Portionierband können in einem beliebigen Winkel zueinander angeordnet sein. Bevorzugt ist jedoch eine Anordnung in einem rechten Winkel.

In einer bevorzugten Ausführungsform der vorliegenden Erfindung ist die Lage der Übergabekante in und gegen die Förderrichtung des Aufreihbandes veränderbar und das Portionierband relativ zu der Übergabekante in einer Richtung beweglich. Die beiden Richtungen liegen vorzugsweise in einer Ebene und können einen beliebigen Winkel zueinander einnehmen, wobei der Winkel zwischen der Förderrichtung und der Bewegungsrichtung des Portionierbandes vorzugsweise 90° oder 270° beträgt.

In einer anderen bevorzugten Ausführungsform der vorliegenden Erfindung ist die Lage der Übergabekante in Förderrichtung und quer zur Förderrichtung des Aufreihbandes beliebig veränderbar. Das Portionierband wird zur Erzeugung der Portionen bzw. der Formate vorzugsweise nicht bewegt.

In einer weiteren bevorzugten Ausführungsform der vorliegenden Erfindung ist das Portionierband mindestens in zwei vorzugsweise senkrecht aufeinander stehenden Richtungen beweglich ausgebildet. Die Übergabekante des Aufreihbandes wird zur Erzeugung der Portionen bzw. der Formate vorzugsweise nicht bewegt.

In einer anderen bevorzugten Ausführungsform der vorliegenden Erfindung ist die Lage der Übergabekante in und gegen die Förderrichtung des Aufreihbandes veränderbar und weist ein Mittel auf, mit dem die Produkte auf dem Aufreihband relativ zu dessen Mittenspur aufreihbar sind. Das Portionierband wird zur Erzeugung der Portionen bzw. der Formate vorzugsweise nicht bewegt.

Vorzugsweise weist die Vorrichtung mehrere Aufreih- und/oder Portionierbänder auf, wobei deren Förderrichtung jeweils gleichgerichtet oder gegenläufig sein können.

Vorzugsweise ist die Übergabekante an dem Aufreihband vorzugsweise in einer Führung verschieblich gelagert, wobei die Verschiebung vorzugsweise durch einen Servomotor erfolgt. In diesem Fall muss bei dem Aufreihband eine Kompensation der Bandlänge vorgesehen werden. Diese Ausführungsform der vorliegenden Erfindung hat den Vorteil, dass die genaue Position des Endes des Aufreihbandes jederzeit elektronisch ermittelbar ist. Sie erlaubt eine stufenlose Positionierung der abzulegenden Produkte auf dem Positionierband. Eine verschieblich gelagerte Übergabekante hat weiterhin den Vorteil, dass die Produkte von dem Aufreihband auf das Portionierband durch einen schnellen Rückhub vorzugsweise bei konstanter Transportgeschwindigkeit des Aufreihbandes übergeben werden können. Diese Ausführungsform der vorliegenden Erfindung bewirkt eine Reduzierung des Kippeffektes der Produkte während deren parabelförmiger Flugbahn.

Weiterhin bevorzugt ist das Portionierband auch ein Einlegeband. In diesem Fall werden auf dem Portionierband ein oder mehrere Formate erzeugt, beispielsweise zu einer Verpackungsmaschine transportiert und dann mit dem Portionierband in Verpackungen eingelegt. Insbesondere wenn das Portionierband auch als Einlegeband genutzt wird, ist es vorteilhaft wenn dessen eines Ende verschieblich gelagert ist, so dass das Portionierband verlängert und verkürzt werden kann. Besonders bevorzugt ist das Portionierband als sogenanntes Rückzugs- oder Shuttleband ausgeführt, so dass die Produkte mit einem schnellen Rückhub des Portionierbandes in die Verpackungsmulden eingelegt werden können. Ganz besonders bevorzugt erfolgt die Verschiebung des besagten Endes durch einen Servomotor, wobei das Band bei dem Rückzug still steht. Diese Ausführungsform der vorliegenden Erfindung hat den Vorteil, dass dessen Positionierung sehr exakt erfolgt und dass die genaue Position des Endes des Portionierbandes jederzeit elektronisch ermittelbar ist.

Weiterhin bevorzugt erfolgt der Antrieb des Aufreihbandes und/oder des Portionierbandes ebenfalls jeweils durch einen Servomotor, so dass die Bewegungen der Bänder sehr genau steuerbar sind und durch einen Geber an eine zentrale Steuereinheit übermittelt werden können.

Die erfindungsgemäße Vorrichtung weist ein Detektionsmittel, vorzugsweise eine Photozelle, auf. Dieses Detektionsmittel ist vorzugsweise im Bereich des Anfangs des Aufreihbandes angeordnet und erfasst die Lage der Produkte auf dem Aufreihband zumindest in Förderrichtung. In diesem Fall müssen die Produkte im wesentlichen zueinander fluchtend auf dem Aufreihband angeordnet sein, damit exakte Portionen bzw. Formate erzeugt werden können. Für den Fall, dass das Detektionsmittel auch die Lage der Produkte relativ zur Mittenspur des Aufreihbandes ermittelt, kann diese Information bei der Regelung der Lage der Übergabekante und/oder der Bewegung des Portionierbandes berücksichtigt werden, um die Qualität der Portionen bzw. Formate zu verbessern.

Vorzugsweise werden die Signale des Detektionsmittels an einen Computer, beispielsweise eine Speicher-Programmierbare-Steuerung (SPS) übermittelt, die wiederum mit den Antrieben, vorzugsweise den Servomotoren, verbunden ist. Anhand der von dem Detektionsmittel und den Antrieben übermittelten Daten ist der genaue Ort des jeweiligen Produktes innerhalb der Vorrichtung berechenbar. Des weiteren werden mit dem Computer die Antriebe der erfindungsgemäßen Vorrichtung geregelt. Diese Ausführungsform der vorliegenden Erfindung hat den Vorteil, dass beliebige Portionsbilder und Formate frei programmiert und hinterlegt werden können und dass die Portionsbilder und/oder die Formate gewechselt werden können, ohne dass eine bauliche Veränderung an der erfindungsgemäßen Vorrichtung vorgenommen werden muss. Vorzugsweise ist der Steuerung ein Maß für die Taktung der Bewegung des Portionierbandes hinterlegt. Von Vorteil ist es auch, wenn die Steuerung erst dann ein Signal an den Antrieb des Portionierbandes übermittelt, wenn alle Reihen des Portionierbandes mit Produkten belegt sind. Dadurch wird sichergestellt, dass alle zu beliefernden Reihen, beispielsweise einer nachfolgenden Verpackungsmaschine mit Produkten belegt sind.

Vorzugsweise bleibt die Transportgeschwindigkeit des Aufreihbandes konstant. Diese Ausführungsform der vorliegenden Erfindung hat den Vorteil, dass vor das Aufreihband kein Produktpuffer angeordnet werden muss.

Die erfindungsgemäße Vorrichtung ist einfach und kostengünstig herzustellen und zu betreiben. Mit der erfindungsgemäßen Vorrichtung lassen sich beliebige Portionen und Formate erzeugen. Die Portionsbilder und/oder Formate sind frei programmierbar und können per Knopfdruck beliebig geändert werden ohne dass ein Umbau an der erfindungsgemäßen Vorrichtung vorgenommen werden muss. Die erfindungsgemäße Vorrichtung kann mit einem Detektionsmittel betrieben werden. Die Lage des Produktes auf dem Aufreihband muss nur einmal erfasst werden. Anhand der Signale des Detektionsmittels und der Signale der Geber der Antriebe kann der exakte Weg und die Geschwindigkeit des jeweiligen Produktes innerhalb der Vorrichtung bestimmt werden. Die Produkte müssen an das Aufreihband nicht in einem bestimmten Abstand übergeben werden, so dass vor die erfindungsgemäße Vorrichtung kein Puffer angeordnet werden muss. Ungleichmäßige Produktabstände auf dem Aufreihband können kompensiert werden. Die Geschwindigkeit des Aufreihbandes kann selbst bei der Übergabe der Produkte von dem Aufreihband an das Portionierband konstant gelassen werden, so dass auf einen Produktpuffer verzichtet werden kann. Bei einem Stopp der nachfolgenden Maschine, beispielsweise einer Verpackungsmaschine, wird die erfindungsgemäße Vorrichtung ebenfalls gestoppt, ohne dass die darauf befindlichen Produkte ausgeschieden werden müssten. Der Neustart erfolgt dann automatisch, weil die Vorrichtung die Lage der jeweiligen Produkte auf dem Aufreih- bzw. Portionierband über Weg- und Geschwindigkeitswissen kennt. Bei einer Verwendung der erfindungsgemäßen Vorrichtung als Einlegeband kann der Abstand zwischen der Einlaufmittenspur des Aufreihbandes und der Einlegemittellinie, beispielsweise der Verpackungsmaschine, innerhalb der Maschinengrenze frei gewählt werden.

Die Erfindungsgemäße Vorrichtung kann zusätzlich auch zum Einlegen der portionierten Produkte in Verpackungen eingesetzt werden.

Ein weiterer Gegenstand der vorliegenden Erfindung ist deshalb ein System bestehend aus einer erfindungsgemäßen Vorrichtung und einer Verpackungsmaschine, wobei das Portionierband in diesem Fall auch ein Einlegeband ist, das die Produkte in Verpackungsmulden einlegt, die entlang der Verpackungsmaschine vorzugsweise taktweise gefördert werden.

Vorzugsweise ist das Portionier-/Einlegeband in einem rechten Winkel zu der Verpackungsmaschine und besonders bevorzugt das Aufreihband rechtwinklig zu dem Portionier-/Einlegeband angeordnet. Das Aufreihband fördert dabei die in Reihe ankommenden Produkte auf das Portionierband und positioniert diese entsprechend dem vorgegebenen Portionsbild bzw. Format. Der Fachmann versteht, dass die Produkte auf dem Aufreihband bereits in dem gewünschten Portionsbild vorliegen können und auf dem Portionierband nur in dem entsprechenden Format angeordnet werden müssen. Das Portionierband transportiert dann wiederum die so positionierten Portionen zur Verpackungsmaschine und legt diese in den dafür vorgesehenen Ablagen der Einlegestation ab. Die beiden Förderbänder sind dabei prinzipiell gleich aufgebaut, sie unterscheiden sich im Wesentlichen nur in ihrer Breite. Es ist aber durchaus auch möglich, dass beide Förderbänder die gleiche Breite aufweisen. Dabei ist es dann von Vorteil, wenn mehrere Positionierbänder vorhanden sind oder ein Positionierband mehrstreifig geteilt ausgebildet ist und die Bandenden der Portionierbänder in Förderrichtung des Förderbandes beweglich ausgebildet sind. In dem Aufreih- und in dem Positionierband befindet sich vorzugsweise ein Servomotor zum Antrieb des Fördergurtes beziehungsweise Förderbandes und ein weiterer Servomotor zum Antrieb der Bewegung des Bandendes. Die Bewegung des Bandendes ist dabei eine Hin- und Herbewegung.

Vorzugsweise ist die Vorrichtung auf den Takt der Verpackungsmaschine abgestimmt ist. Vorzugsweise wird dann ein Signal zur Taktung des Positionierbandes gegeben, wenn alle Reihen der Einlegestation belegt sind. Die erfindungsgemäße Vorrichtung und die Verpackungsmaschine können durch einen gemeinsamen Computer gesteuert werden.

Das erfindungsgemäße System ist einfach und kostengünstig zu errichten. Die erfindungsgemäße Vorrichtung kann mit jeder beliebigen Verpackungsmaschine kombiniert werden. Mit dem erfindungsgemäßen System lassen sich beliebige Portionen in Verpackungsmulden, die in einem beliebigen Format zueinander angeordnet sind, einlegen. Die Portionsbilder und/oder die Formate sind frei programmierbar und können per Knopfdruck beliebig geändert werden, so dass bei einem Formatwechsel innerhalb der Verpackungsmaschine, bei einem Produktwechsel oder bei einer Änderung des Portionsbildes kein Umbau an dem erfindungsgemäßen System vorgenommen werden muss. Das erfindungsgemäße System wird mit einem Detektionsmittel betrieben. Die Lage des Produktes auf dem Aufreihband muss nur einmal erfasst werden. Anhand der Signale des Detektionsmittels und der Signale der Geber der Antriebe kann der exakte Weg und die Geschwindigkeit des jeweiligen Produktes innerhalb der Vorrichtung bestimmt werden. Die Produkte müssen an das Aufreihband nicht in einem bestimmten Abstand übergeben werden, so dass vor das erfindungsgemäße System kein Puffer angeordnet werden muss. Ungleichmäßige Produktabstände auf dem Aufreihband können kompensiert werden. Die Geschwindigkeit des Aufreihbandes kann selbst bei der Übergabe der Produkte von dem Aufreihband an das Portionierband konstant gelassen werden, so dass auf einen Produktpuffer verzichtet werden kann. Bei einem Stopp der nachfolgenden Verpackungsmaschine, werden das Aufreih- und das Portionier-/Einlegeband ebenfalls gestoppt, ohne dass die darauf befindlichen Produkte ausgeschieden werden müssten. Der Neustart des Aufreih- und des Portionier-/Einlegebandes erfolgt dann automatisch, sobald die Verpackungsmaschine wieder betriebsbereit ist, weil die Vorrichtung die Lage der jeweiligen Produkte auf dem Aufreih- bzw. Portionierband über das Weg- und Geschwindigkeitswissen kennt. Der Abstand zwischen der Einlaufmittenspur des Aufreihbandes und der Einlegemittellinle der Verpackungsmaschine, kann innerhalb der Maschinengrenze frei gewählt werden.

Ein weiterer Gegenstand der vorliegenden Erfindung ist ein Verfahren gemäß Anspruch 18.

Eine Portion im Sinne der Erfindung ist jede Anordnung, in der Produkte, insbesondere Lebensmittel in einem bestimmten Portionsbild arrangiert werden. Beispielhaft jedoch nicht einschränkend für mögliche Portionsbilder seien hier der Stapel, der Schindel in Längs- und in Querrichtung jeweils mit und ohne Überlappung, Zick-Zack-Muster sowie die terrassenförmige Reihen genannt.

Ein Format im Sinne der Erfindung ist die Anordnung, die die einzelnen Portionen zueinander einnehmen. In der Regel richtet sich das Format der Portionen nach der Anordnung der Verpackungsmulden einer nachfolgenden Verpackungsmaschine, in die die Portionen abgelegt werden und/oder dem Takt, mit dem die Verpackungsmulden weitertransportiert werden. Vorzugsweise werden die Produkte in parallelen Produktreihen abgelegt.

Als Aufreihband eignet sich jede dem Fachmann geläufige Fördervorrichtung. Vorzugsweise ist das Aufreihband jedoch ein Endlosförderband. Die Veränderung der Lage der Übergabekante des Aufreihbandes kann dadurch erzeugt werden, dass das gesamte Aufreihband relativ zu dem Portionierband vorzugsweise in einer Führung verschieblich gelagert ist und/oder dass die Länge des Aufreihbandes beispielsweise durch eine Ausführung als Rückzugs- oder Shuttleband veränderbar ist. Die Vorrichtung kann mehrere Aufreihbänder, die vorzugsweise unabhängig voneinander arbeiten, aufweisen.

Falls die Lage der Übergabekante relativ zu dem Portionierband veränderbar ist, so sollte die Bewegung der Übergabekante vorzugsweise so gestaltet werden, dass die Übergabekante die Breite bzw. die Länge des Portionierbandes so weit überfährt, dass die Produkte unter Berücksichtigung von deren Wurfparabel auf allen möglichen Orten des Portionierbandes abgelegt werden können. Die Geschwindigkeit mit der die Lage der Übergabekante verändert wird, ist vorzugsweise größer als die Transportgeschwindigkeit des Aufreihbandes.

Als Portionierband eignet sich jede dem Fachmann geläufige Vorrichtung auf dem die Produkte in gewissen Portionen und in gewissen Formaten abgelegt und vorzugsweise weitertransportiert werden können. Vorzugsweise ist das Portionierband jedoch ein Endlosband. Das Portionierband ist vorzugsweise in einem Maschinenrahmen angeordnet. Die Veränderung der Lage des Portionierbandes kann dadurch erzeugt werden, dass der gesamte Maschinenrahmen relativ zu der Übergabekante und/oder dass das Portionierband relativ zu dem Maschinenrahmen bewegt wird. Die erfindungsgemäße Vorrichtung kann mehrere Portionierbänder, die vorzugsweise unabhängig voneinander arbeiten, aufweisen.

Falls das Portionierbandes relativ zu der Übergabekante beweglich ist, so sollte die Bewegung des Portionierbandes vorzugsweise so gestaltet werden, dass die Produkte unter Berücksichtigung von deren Wurfparabel auf allen möglichen Orten des Portionierbandes abgelegt werden können. Die Geschwindigkeit mit der das Portionierband bewegt wird, ist vorzugsweise größer als die Transportgeschwindigkeit des Aufreihbandes.

Das Aufreihband und das Portionierband können in einem beliebigen Winkel zueinander angeordnet sein. Bevorzugt ist jedoch eine Anordnung in einem rechten Winkel.

In einer bevorzugten Ausführungsform der vorliegenden Erfindung ist die Lage der Übergabekante in und gegen die Förderrichtung des Aufreihbandes veränderbar und das Portionierband relativ zu der Übergabekante in einer Richtung beweglich. Die beiden Richtungen liegen vorzugsweise in einer Ebene und können einen beliebigen Winkel zueinander einnehmen, wobei der Winkel zwischen der Förderrichtung und der Bewegungsrichtung des Portionierbandes vorzugsweise 90° oder 270° beträgt.

In einer anderen bevorzugten Ausführungsform der vorliegenden Erfindung ist die Lage der Übergabekante in Förderrichtung und quer zur Förderrichtung des Aufreihbandes beliebig veränderbar. Das Portionierband wird zur Erzeugung der Portionen bzw. der Formate vorzugsweise nicht bewegt.

In einer weiteren bevorzugten Ausführungsform der vorliegenden Erfindung ist das Portionierband mindestens in zwei vorzugsweise senkrecht aufeinander stehenden Richtungen beweglich ausgebildet. Die Übergabekante des Aufreihbandes wird zur Erzeugung der Portionen bzw. der Formate vorzugsweise nicht bewegt.

In einer anderen bevorzugten Ausführungsform der vorliegenden Erfindung ist die Lage der Übergabekante in und gegen die Förderrichtung des Aufreihbandes veränderbar und weist ein Mittel auf, mit dem die Produkte auf dem Aufreihband relativ zu dessen Mittenspur aufreihbar sind. Das Portionierband wird zur Erzeugung der Portionen bzw. der Formate vorzugsweise nicht bewegt.

Vorzugsweise ist die Übergabekante an dem Aufreihband verschieblich gelagert, wobei die Verschiebung vorzugsweise durch einen Servomotor erfolgt. In diesem Fall muss für das Aufreihband eine Kompensation der Bandlänge vorgesehen werden. Diese Ausführungsform der vorliegenden Erfindung hat den Vorteil, dass die genaue Position des Endes des Aufreihbandes jederzeit elektronisch ermittelbar ist. Sie erlaubt eine stufenlose Positionierung der abzulegenden Produkte auf dem Positionierband. Eine verschieblich gelagerte Übergabekante hat weiterhin den Vorteil, dass die Produkte von dem Aufreihband auf das Portionierband durch einen schnellen Rückhub vorzugsweise bei konstanter Transportgeschwindigkeit des Aufreihbandes übergeben werden können. Diese Ausführungsform der vorliegenden Erfindung bewirkt eine Reduzierung des Kippeffektes der Produkte während deren parabelförmigen Flugbahn.

Weiterhin ist das Portionierband auch ein Einlegeband. In diesem Fall werden auf dem Portionierband ein oder mehrere Formate erzeugt, beispielsweise zu einer Verpackungsmaschine transportiert und dann mit dem Portionierband in eine Verpackung eingelegt. Insbesondere wenn das Portionierband auch als Einlegeband genutzt wird, Ist es vorteilhaft wenn dessen eines Ende verschieblich gelagert ist, so dass das Portionierband verlängert und verkürzt werden kann. Besonders bevorzugt ist das Portionierband als sogenanntes Rückzugs- oder Shuttleband ausgeführt, so dass die Produkte mit einem schnellen Rückhub des Portionierbandes in die Verpackungsmulden eingelegt werden, wobei das Portionierband beim Rückzug still steht. Ganz besonders bevorzugt erfolgt die Verschiebung des besagten Endes durch einen Servomotor. Diese Ausführungsform der vorliegenden Erfindung hat den Vorteil, dass die Positionierung sehr exakt erfolgt und dass die genaue Position des Endes des Portionierbandes jederzeit elektronisch ermittelbar ist.

Weiterhin bevorzugt erfolgt der Antrieb des Aufreihbandes und/oder des Portionierbandes ebenfalls jeweils durch einen Servomotor, so dass die Bewegungen der Bänder sehr genau steuerbar sind und durch einen Geber an eine zentrale Steuereinheit übermittelt werden können.

Die Vorrichtung weist ein Detektionsmittel, vorzugsweise eine Photozelle, auf. Dieses Detektionsmittel ist vorzugsweise im Bereich des Anfangs des Aufreihbandes angeordnet und ermittelt die Lage der Produkte auf dem Aufreihband zumindest in Förderrichtung. In diesem Fall müssen die Produkte im wesentlichen zueinander fluchtend auf dem Aufreihband angeordnet sein, damit exakte Portionen bzw. Formate erzeugt werden können. Für den Fall, dass das Detektionsmittel auch die Lage der Produkte relativ zur Mittenspur des Aufreihbandes ermittelt, kann diese Information bei der Regelung der Lage der Übergabekante und/oder der Bewegung des Portionierbandes berücksichtigt werden, um die Qualität der Portionen bzw. Formate zu verbessern.

Vorzugsweise werden die Signale des Detektionsmittels an einen Computer, beispielsweise eine Speicher-Programmierbare-Steuerung (SPS) übermittelt, die wiederum mit den Antrieben, vorzugsweise den Servomotoren verbunden ist. Anhand der von dem Detektionsmittel und den Antrieben übermittelten Daten ist der genaue Ort des jeweiligen Produktes innerhalb der Vorrichtung berechenbar. Des weiteren werden mit dem Computer die Antriebe der erfindungsgemäßen Vorrichtung geregelt. Diese Ausführungsform der vorliegenden Erfindung hat den Vorteil, dass beliebige Portionsbilder und Formate frei programmiert und hinterlegt werden können und dass die Portionsbilder und/oder die Formate gewechselt werden können, ohne dass eine bauliche Veränderung an der erfindungsgemäßen Vorrichtung vorgenommen wird. Vorzugsweise ist der Steuerung ein Maß für die Taktung der Bewegung des Portionierbandes hinterlegt. Von Vorteil ist es auch, wenn die Steuerung erst dann ein Signal an den Antrieb des Portionierbandes übermittelt, wenn alle Reihen eines Formates mit Produkten belegt sind. Dadurch wird sichergestellt, dass alle zu beliefernden Reihen, beispielsweise einer nachfolgenden Verpackungsmaschine mit Produkten belegt sind.

Vorzugsweise bleibt die Transportgeschwindigkeit des Aufreihbandes konstant. Diese Ausführungsform der vorliegenden Erfindung hat den Vorteil, dass vor das Aufreihband kein Produktpuffer angeordnet werden muss.

Das erfindungsgemäße Verfahren ist einfach und kostengünstig durchzuführen. Mit dem erfindungsgemäßen Verfahren lassen sich beliebige Portionsbilder und Formate erzeugen. Die Portionsbilder und/oder die Formate sind frei programmierbar und können per Knopfdruck beliebig geändert werden, ohne dass ein Umbau an der erfindungsgemäßen Vorrichtung vorgenommen werden muss. Das erfindungsgemäße Verfahren kann mit einem Detektionsmittel betrieben werden. Die Lage des Produktes auf dem Aufreihband muss nur einmal erfasst werden. Anhand der Signale des Detektionsmittels und der Signale der Geber der Antriebe kann der exakte Weg und die Geschwindigkeit des jeweiligen Produktes innerhalb der Vorrichtung bestimmt werden. Die Produkte müssen an das Aufreihband nicht in einem bestimmten Abstand übergeben werden, so dass bei dem erfindungsgemäßen Verfahren kein Produktpuffer vorgesehen werden muss. Ungleichmäßige Produktabstände auf dem Aufreihband können kompensiert werden. Die Geschwindigkeit des Aufreihbandes kann selbst bei der Übergabe der Produkte von dem Aufreihband an das Portionierband konstant gelassen werden, so dass auf einen Produktpuffer verzichtet werden kann. Bei einem Stopp der nachfolgenden Maschine, beispielsweise einer Verpackungsmaschine, wird die erfindungsgemäße Vorrichtung ebenfalls gestoppt, ohne dass die darauf befindlichen Produkte ausgeschieden werden müssten. Der Neustart erfolgt dann automatisch, weil die Lage der jeweiligen Produkte auf dem Aufreih- bzw. Portionierband über Weg- und Geschwindigkeitswissen bekannt ist Bei einer Verwendung der erfindungsgemäßen Vorrichtung als Einlegeband kann der Abstand zwischen der Einlaufmittenspur des Aufreihbandes und der Einlegemittellinie, beispielsweise einer Verpackungsmaschine, innerhalb der Maschinengrenze frei gewählt werden.

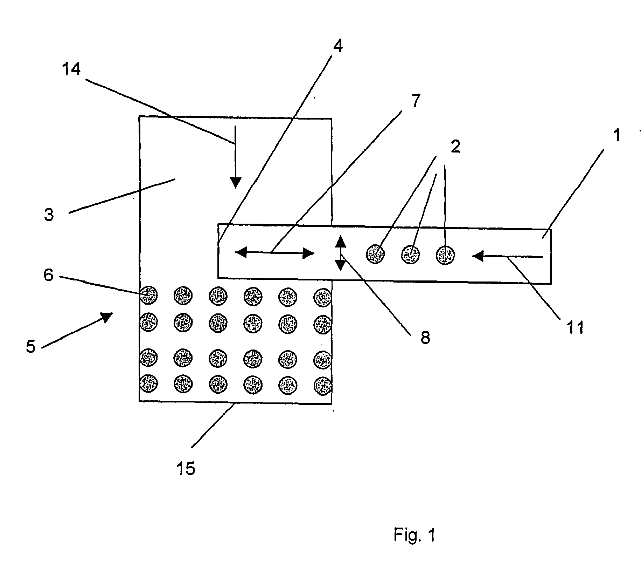

Im folgenden wird die Erfindung anhand der **Figuren 1 - 19** erläutert. Diese Erläuterungen sind lediglich beispielhaft und schränken den allgemeinen Erfindungsgedanken nicht ein. Die Erläuterungen gelten gleichsam für die erfindungsgemäße Vorrichtung, das erfindungsgemäße System sowie das erfindungsgemäße Verfahren.
**Figur 1** zeigt eine Ausgestaltungsform der erfindungsgemäßen Vorrichtung, bei der das Aufreihband in zwei Richtungen bewegt wird.
**Figur 2** zeigt eine Ausgestaltungsform der erfindungsgemäßen Vorrichtung, bei der das Portionierband in zwei Richtungen bewegt wird.
**Figur 3** zeigt eine weitere Ausgestaltungsform der erfindungsgemäßen Vorrichtung, bei der das Portionierband in zwei Richtungen bewegt wird.
**Figur 4** zeigt eine Ausgestaltungsform der erfindungsgemäßen Vorrichtung, bei der die Übergabekante des Aufreihbandes in Transportrichtung und das Portionierband quer dazu bewegt wird.
**Figur 5** zeigt eine Ausgestaltungsform der erfindungsgemäßen Vorrichtung, bei der das Aufreihband quer zur Transportrichtung und das Portionierband in Transportrichtung des Aufreihbandes bewegt wird.
**Figur 6** zeigt eine Ausgestaltungsform der erfindungsgemäßen Vorrichtung, mit einem Mittel, mit dem die Produkte auf dem Aufreihband relativ zur Mittenspur aufreihbar sind.
**Figur 7** zeigt eine Ausgestaltungsform der erfindungsgemäßen Vorrichtung mit zwei Aufreihbändem.
**Figur 8** zeigt eine weitere Ausgestaltungsform der erfindungsgemäßen Vorrichtung mit zwei Aufreihbändem.
**Figur 9** zeigt eine Ausgestaltungsform der erfindungsgemäßen Vorrichtung mit zwei Portionierbändem.
**Figur 10** zeigt eine erfindungsgemäße Vorrichtung, bei der das Portionierband auch ein Einlegeband ist.
**Figur 11** zeigt Produkte in einer gleichmäßigen Reihe.
**Figur 12** zeigt Produkte in einer ungleichmäßigen Reihe.
**Figur 13** zeigt nach vorne geschindelte Produkte.
**Figur 14** zeigt nach hinten geschindelte Produkte.
**Figur 15** zeigt terrassenförmig angeordnete Produkte.
**Figur 16** zeigt gestapelte Produkte.
**Figur 17** zeigt quergeschindelte Produkte.
**Figur 18** zeigt geschindelte Produkte ohne Überlappung.
**Figur 19** zeigt versetzt angeordnete Produkte.

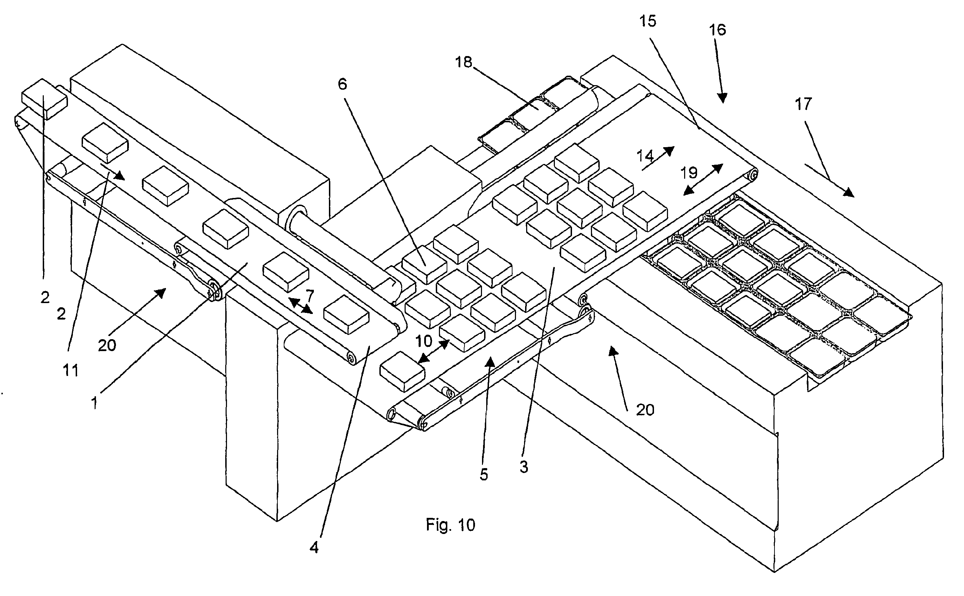

**Figur 1** zeigt eine Ausgestaltungsform der erfindungsgemäßen Vorrichtung mit einem Aufreihband 1 und einem Portionierband 3. Die Produkte 2 (nur drei dargestellt) werden mit dem Aufreihband transportiert. Die Transportrichtung ist durch den Pfeil 11 symbolisiert. Der Abstand der Produkte 2 auf dem Aufreihband 1 muss in der Förderrichtung 11 nicht konstant sein. Das Aufreihband weist einen Maschinenrahmen (nicht dargestellt) auf, in dem ein konventionelles Endlosband angeordnet ist. Das Endlosband wird durch einen Servomotor mit einer konstanten Geschwindigkeit angetrieben. Das Aufreihband weist eine Übergabekante 4 auf, an der die Produkte 2 auf das Portionierband 3 abgeworfen werden. Bei der vorliegenden Ausgestaltungsform der vorliegenden Erfindung ist die Übergabekante sowohl in und gegen Transportrichtung 11 als auch quer zur Transportrichtung 11 des Aufreihbandes relativ zu dem Portionierband beweglich, was durch die Doppelpfeile 7 bzw. 8 symbolisiert wird. Zur Veränderung der Lage der Übergabekante 4 in gegen die Transportrichtung 11 ist die Übergabekante 4 relativ zu dem Maschinenrahmen in einer nicht dargestellten Führung verschieblich gelagert, wodurch das Transportband verlängert bzw. verkürzt wird. Der Antrieb der Übergabekante erfolgt durch einen Servomotor. Bei dieser Ausführungsform der vorliegenden Erfindung kann der Abwurf der Produkte 2 durch einen schnellen Rückhub erfolgen, so dass der Kippeffekt der Produkte während der parabelförmigen Flugbahn vermindert wird. Der Fachmann versteht, dass dafür an dem Aufreihband eine Bandlängenkompensation vorgesehen sein muss, so dass zum einen eine ausreichende Bandlänge zur Verfügung steht, zum anderen das Band jedoch immer straff gespannt ist. Die Bewegung der Übergabekante 4 quer zur Transportrichtung 8 wird durch eine Bewegung des gesamten Aufreihbandes 1, die durch einen Servomotor erfolgt, erzielt. Der Fachmann versteht, dass auch die Bewegung des Aufreihbandes in Transportrichtung der Produkte durch eine Verschiebung des gesamten Aufreihbandes erzielt werden kann. Da die beiden Bewegungen überlagert werden können, können beliebige Punkte in einer Ebene angefahren werden. Die Bewegung der Übergabekante 4 des Aufreihbandes 1 ist so bemessen, dass die Produkte 2 unter Berücksichtigung der Wurfparabel an allen gewünschten Punkten des Portionierbandes 3 abgelegt werden können. Die Bewegung der Abwurfkante 4 zwischen zwei Abwürfen muss so schnell erfolgen, dass die Abwurfkante zumindest in dem Augenblick seine neue Position erreicht hat, in dem das abzuwerfende Produkt die Abwurfkante erreicht. Während des Ablegens der Produkte 2 in bestimmte Portionen 6 und Formate 5 steht das Portionierband 3 still.
Das Portionierband 3 ist in dem vorliegenden Fall auch als ein Förderband ausgebildet, das die Produkte taktweise in die durch den Pfeil 14 symbolisierten Richtung transportiert, sobald eine Formatkonfiguration 5, die in dem vorliegenden Fall aus sechs nebeneinanderliegenden Portionen 6 in zwei Reihen besteht, auf dem Portionierband abgelegt ist. Der Fachmann versteht, dass diese Funktion auch zur Portions- und/oder Formatbildung eingesetzt werden kann. Der Antrieb des Förderbandes erfolgt durch einen Servomotor. Die erfindungsgemäße Vorrichtung weist eine Steuerung auf, die die Lage der Übergabekante so steuert, dass beliebige Portionsbilder und Formate auf dem Portionierband erzeugbar sind. Die Steuerung steuert ebenfalls den Vorschub 14.
Mit dem Portionierband 3 können die Produkte nicht nur weitertransportiert sondern auch in Verpackungen eingelegt werden. Das Portionierband 3 ist dann gleichzeitig auch ein Einlegeband. Für diesen Anwendungsfall ist es von Vorteil, wenn das Ende 15 des Portionierbandes ebenfalls verschieblich an dem Rahmen (nicht dargestellt) des Portionierbandes 3 gelagert ist. Die Portionen 6 können dann mit einem schnellen Rückzug des Endes 15 bei stillstehendem Band in die Verpackungen eingelegt werden. Das Einlegen der Portionen 6 in Verpackungen wird ebenfalls von der oben genannten Steuerung gesteuert. Auf das Einlegen von Produkten in Verpackungen wird in den Erläuterungen zu Figur 10 genauer eingegangen.

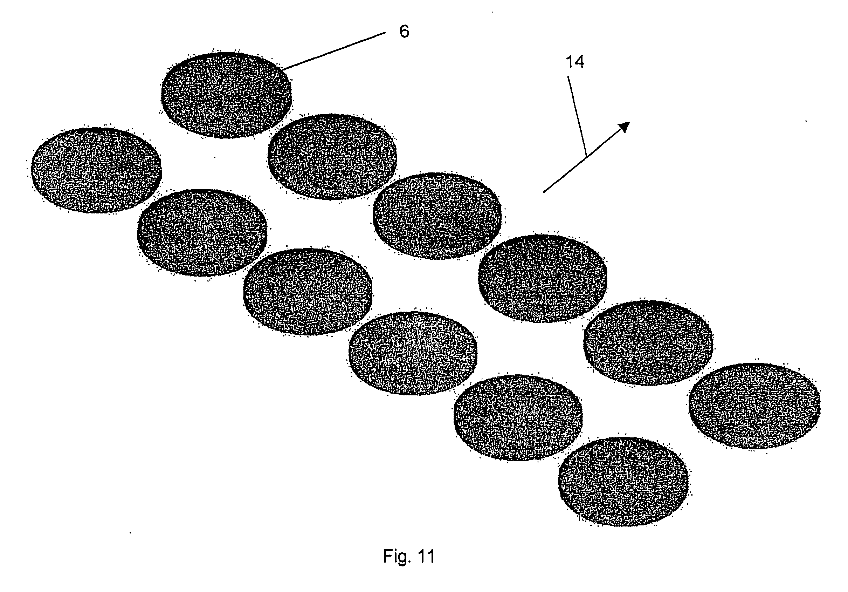

Der Fachmann versteht, dass es sich bei den Portionen 6 nicht um ein Produkt sondern um mehrere Produkte, die zu einer Portion konfiguriert wurden, handeln kann. Diese Portion kann bereits fertig an das Aufreihband übergeben worden sein und/oder durch die Bewegung der Übergabekante erzeugt werden. Mögliche Portionen sind den Figuren 11 - 19 dargestellt.
Die erfindungsgemäße Vorrichtung weist am Anfang des Aufreihbandes 1 eine Photozelle (nicht dargestellt) auf, die zumindest die Lage der Produkte 2 auf dem Aufreihband in Förderrichtung erfasst. Der weitere Weg und die Geschwindigkeit des jeweiligen Produktes 2 bzw. der jeweiligen Portion 6 auf dem Aufreih- und Portionierband wird dann genau berechnet, so dass die erfindungsgemäße Vorrichtung zu jedem Zeitpunkt genau weiß, wo sich das jeweilige Produkt befindet und welche Geschwindigkeit es aufweist.
Wie weiterhin in Figur 1 erkennbar ist wird durch die Bewegung der Übergabekante eine Aufteilung eines einreihigen Produktstroms in einen mehrspaltigen (sechsspaltigen) Produktstrom möglich.

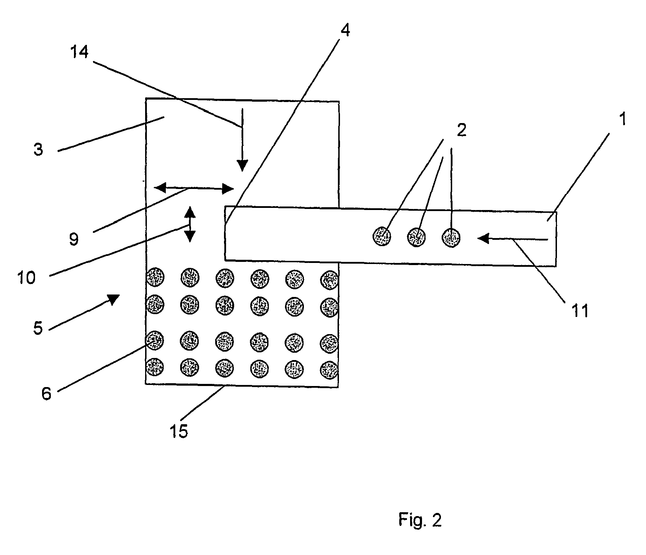

Die Ausgestaltungsform der erfindungsgemäßen Vorrichtung in **Figur 2** entspricht im wesentlichen der Ausgestaltungsform der Vorrichtung gemäß Figur 1, nur dass in Figur 2 das Portionierband in zwei Richtungen bewegt wird. Die Ausführungen zu Figur 1 gelten somit analog. Das Portionierband 3 ist als Endlosband ausgeführt, das in einem Maschinenrahmen (nicht dargestellt) geführt wird. Die Bewegung des Portionierbandes relativ zu der Übergabekante und in Richtung 10 erfolgt durch eine Hin- und Herbewegung des Endlosbandes relativ zu dem Maschinenrahmen. Die Bewegung des Portionierbandes relativ zu der Übergabekante und in Richtung 9 erfolgt durch eine Verschiebung des gesamten Maschinenrahmens. Die Bewegungen des Portionierbandes 3 relativ zu der Übergabekante 4 erfolgt mit zwei Servomotoren (nicht dargestellt).

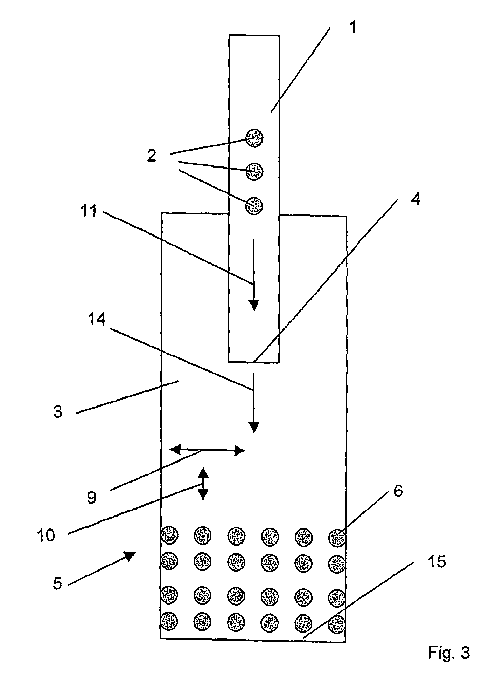

**Figur 3** zeigt eine weitere Ausgestaltungsform der erfindungsgemäßen Vorrichtung, bei der das Portionierband in zwei Richtungen bewegt wird. Diese Ausführungsform der vorliegenden Erfindung entspricht im wesentlichen der Ausführungsform gemäß Figur 2, nur dass in dem vorliegenden Bespiel das Aufreihband 1 parallel zu dem Portionierband 3 angeordnet ist. Die Ausführungen zu den Figuren 1 und 2 gelten somit analog.

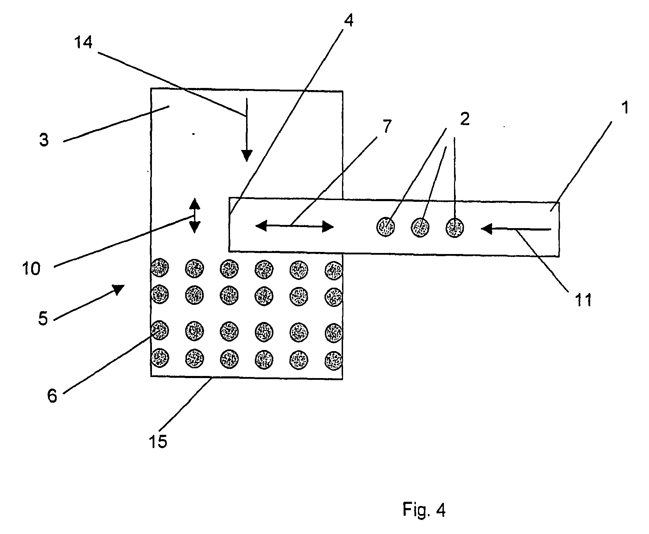

**Figur 4** zeigt eine Ausgestaltungsform der erfindungsgemäßen Vorrichtung, bei der die Übergabekante des Aufreihbandes in und/oder gegen dessen Transportrichtung und das Portionierband quer dazu bewegt wird. Bei dieser Ausführungsform sind demnach die Bewegungen in und quer zur Transportrichtung des Aufreihbandes auf die beiden Aggregate aufgeteilt. Die Bewegung der Übergabekante 4 erfolgt vorzugsweise dadurch, dass die Übergabekante 4 an dem Maschinenrahmen (nicht dargestellt) des Aufreihbandes 1 beweglich gelagert ist und von einem Servomotor innerhalb der Führung hin und her geschoben wird. Das Portionierband ist vorzugsweise als Endlosband ausgeführt, das in einem Maschinenrahmen geführt ist und von einem Servomotor angetrieben wird. Die Bewegung des Portionierbandes 3 wird vorzugsweise durch eine Hin- und/oder Herbewegung des Endlosbandes erzielt. Diese Ausführungsform hat den Vorteil, das beliebige Portionsbilder 6 und Formatkonfigurationen 5 auf dem Portionierband 3 abgelegt werden können, ohne dass das Aufreihband oder das Portionierband in Gänze bewegt werden müssten. Im übrigen gelten die Ausführungen zu den Figuren 1 - 3 analog.

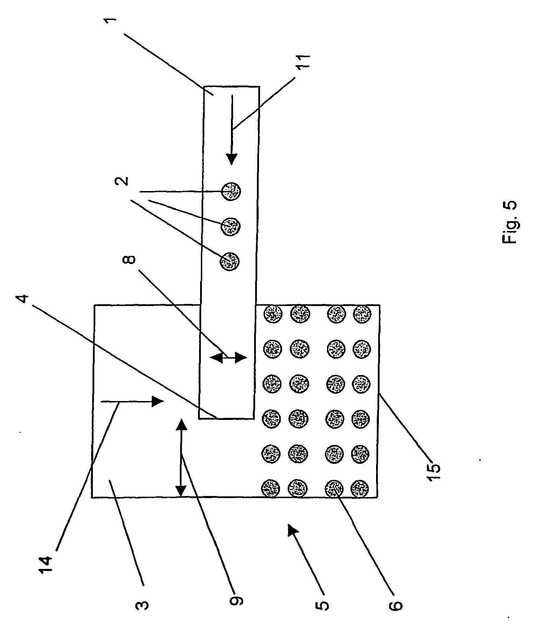

**Figur 5** zeigt eine Ausgestaltungsform der erfindungsgemäßen Vorrichtung, bei der die Übergabekante des Aufreihbandes quer zur Transportrichtung und das Portionierband in und/oder gegen Transportrichtung des Aufreihbandes bewegt wird. Auch bei dieser Ausführungsform sind demnach die Bewegungen in und quer zur Transportrichtung des Aufreihbandes auf die beiden Aggregate aufgeteilt. Im übrigen gelten die Ausführungen zu den Figuren 1 -4 analog.

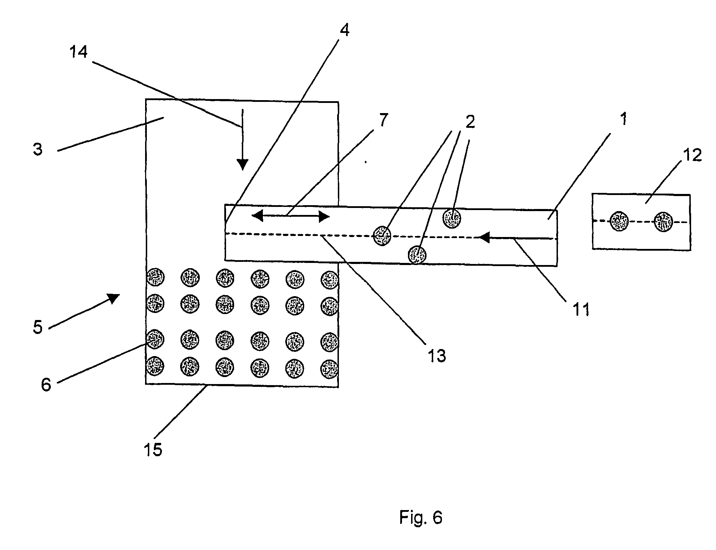

**Figur 6** zeigt eine Ausgestaltungsform der erfindungsgemäßen Vorrichtung, mit einem Mittel 12, mit dem die Produkte auf dem Aufreihband 1 relativ zur Mittenspur 13 aufreihbar sind. Die Produkte 2 werden so relativ zur Mittenspur 13 auf dem Aufreihband 1 verteilt, dass die gewünschten Portionsbilder 6 bzw. Formatkonfigurationen 5 lediglich durch eine Bewegung der Übergabekante 4 des Aufreihbandes relativ zu dem Portionierband und/oder des Portionierbandes 3 relativ zu der Übergabekante 4 erfolgt. Beispielsweise kann auf dem Portionierband ein Kreis abgelegt werden, wenn die Produkte 2 auf dem Aufreihband sinusförmig angeordnet werden. Im Übrigen gelten die Ausführungen zu den Figuren 1 - 5 analog.

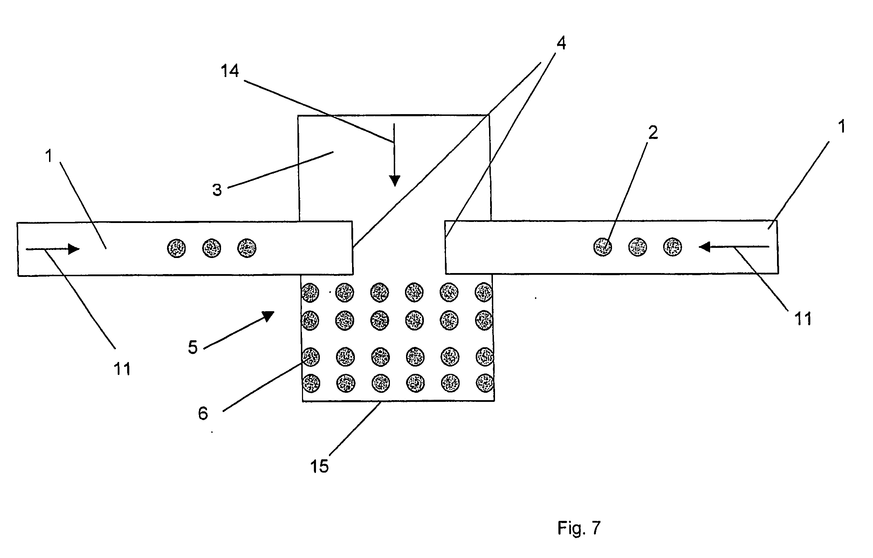

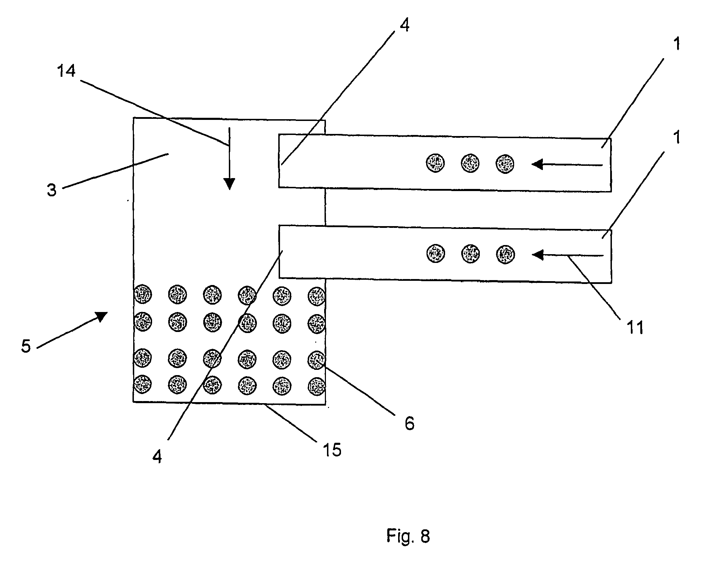

Die **Figur 7 und 8** zeigen eine Ausgestaltungsform der erfindungsgemäßen Vorrichtung mit zwei Aufreihbändern 1, die in dem vorliegenden Fall als Endlosbänder, die in Maschinenrahmen geführt werden, ausgeführt sind. Der Antrieb der Endlosbänder erfolgt jeweils mit einem Servomotor. Die Übergabekante 4 ist jeweils in einer Führung (nicht dargestellt) verschieblich an dem Maschinenrahmen angeordnet, wobei die Verschiebung der Übergabekante ebenfalls durch einen Servomotor erfolgt. Beide Aufreihbänder sind völlig unabhängig voneinander betreibbar. Dies gilt sowohl für die Antriebe der Endlosbänder als auch für die Verschiebung der Übergabekante. Diese Ausführungsform der vorliegenden Erfindung ist dann von Vorteil, wenn mehrere Produktreihen zur Anlieferung in ein Ablagesystem beziehungsweise in eine Einlegestation zur Verfügung gestellt werden müssen. Im übrigen wird auf die Ausführungen zu Figur 1 verwiesen.

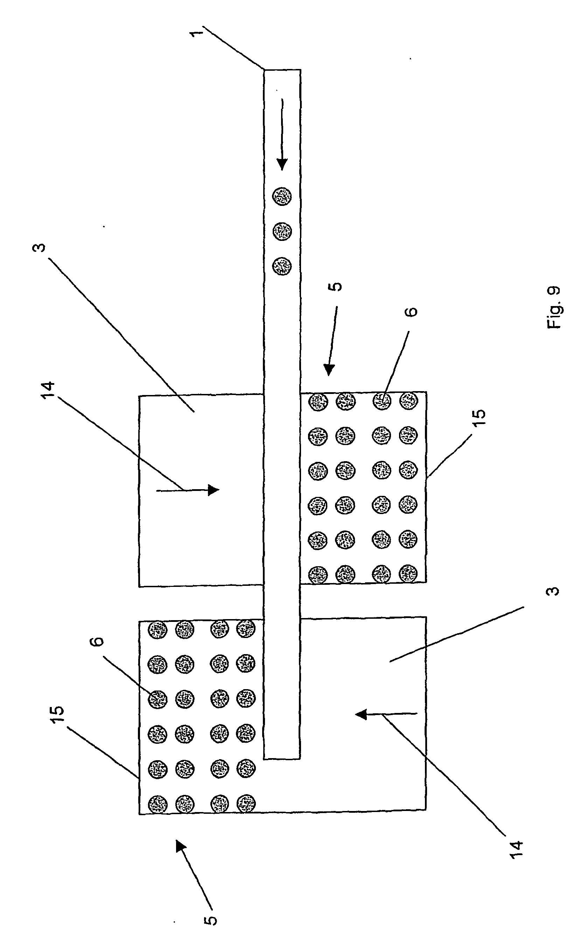

**Figur 9** zeigt eine weitere Ausgestaltungsform der erfindungsgemäßen Vorrichtung mit zwei Portionierbändern 3. Diese Lösung ist insbesondere dann von Interesse, wenn beispielsweise zwei Verpackungsmaschinen mit denselben Produkten beschickt werden sollen, wobei die Portionskonfigurationen 6 und die Formate 5 jeweils unterschiedlich sein können.

**Figur 10** zeigt ein erfindungsgemäßes System, bestehend aus einer erfindungsgemäßen Vorrichtung und einer taktweise arbeitenden Verpackungsmaschine, von der nur die Einlegestation 16 dargestellt ist. In der Einlegestation 16 werden während eines Taktes neun Verpackungsmulden 18 mit Produkt befüllt und dann um einen Takt weitertransportiert. Die erfindungsgemäße Vorrichtung weist ein Aufreihband 1 und ein rechtwinklig dazu angeordnetes Portionierband 3 auf. Das Aufreihband 1 ist ein einstreifig ausgeführtes Endlosband, dessen Ende 4 wieder beweglich in der bereits zuvor beschriebenen Art und Weise ausgeführt ist. Das Portionierband 3 ist ebenfalls als Endlosband ausgebildet. Das Bandende 15 ist ebenfalls als bewegliches Bandende im Sinne eines Rückzugs/Shuttlebandes ausgelegt. Mit dem Bezugszeichen 11 ist die Förderrichtung der Produkte 2 auf dem Aufreihband 1, mit Bezugszeichen 14 die der Portionen 6 auf dem Portionierband sowie mit 17 die der Portionen 6 in den Verpackungsmulden 18 angegeben. In der Einlegestation 16 sind die Verpackungsmulden 18 lediglich schematisch dargestellt. Mit dem Doppelpfeil 7 wird die Hin- und Herbewegung der Übergabekante 4 und mit dem Pfeil 10 die Bewegung des Portionierbandes 3 relativ zur Übergabekante 4 symbolisiert. Der Doppelpfeil 19 kennzeichnet die Hin- und Herbewegung der Übergabekante 15. In diesem Ausführungsbeispiel gelangen die Produkte 2 von dem Aufreihband 1 auf das als Einlegeband ausgebildete Portionierband, wobei sie durch die bewegliche Ausbildung der Übergabekante 4 beispielsweise in unterschiedlicher Reihenfolge, als Stapel übereinander oder geschindelt als Portionen 6 in dem Format 5 abgelegt werden können. Ein Format 5 besteht in dem vorliegenden Fall aus drei Reihen und drei Spalten, wobei die Anzahl der Reihen der Anzahl der quer zur Transportrichtung 17 nebeneinanderliegenden Verpackungsmulden 18 und die Anzahl der Spalten dem Vorschub der Verpackungsmulden bei einem Takt entspricht. Das Portionierband 3 fördert diese Portionen 6 dann zu der Einlegestation 16. Von dem Portionierband 3 werden die Portionen 6 in die freien Verpackungsmulden in der Einlegestation 16 abgelegt beziehungsweise abgeworfen. Dies ist in diesem Beispiel auch in unterschiedlicher Variation möglich, da das Bandende 15 ebenfalls beweglich ausgebildet ist. Der Fachmann erkennt, dass das Portionierband 3 auch mehrstreifig geteilt ausgebildet sein kann. In diesem Fall ist es dann möglich, deren Bandenden unabhängig voneinander ebenfalls beweglich als Rückzugs-/Shuttleband auszubilden. Beide Bänder weisen eine Bandkompensation 20 auf.

Anhand dieses Beispiels wird nochmals beschrieben, wie die Positionierung der Produkte erfolgt. Die erfindungsgemäße Vorrichtung besteht aus einem Aufreihband 1 und einem Portionierband 3. Dabei steht das Aufreihband 1 parallel zur Verpackungsmaschine mit der Einlegestation 16 und das Portionierband 3 quer zum Förderband 1 und zur Einlegestation 16 der Verpackungsmaschine. Das Aufreihband 1 fördert die Reihe der ankommenden Produkte beziehungsweise Portionen auf das Portionierband 3. Dieses wiederum transportiert dann die Produkte 2 als Portionen 6 und in einem bestimmten Format 5 arrangiert zur Einlegestation 16 der Verpackungsmaschine. Prinzipiell sind beide Bänder 1, 3 als Endlosbänder gleich aufgebaut. Sie unterscheiden sich in dem gewählten Ausführungsbeispiel lediglich nur in ihrer Breite. In jedem der zwei Förderbänder 1, 3 befindet sich ein Servomotor zum Antrieb des Fördergurtes und ein Servomotor zum Antrieb der Bewegung der Bandenden 4, 15. Durch diese Anordnung kann dann das Bandende 4, 15 vor- und zurückgefahren werden. Wie bereits erwähnt, wird diese Ausführungsform auch als Shuttleband bezeichnet.
Mit dem Bezugszeichen 20 ist eine Längenausgleichsvorrichtung angegeben, die eine schnelle Kompensation oder Zurverfügungstellung von Förderband bei einer Änderung der wirksamen Länge des Förderbandes ermöglicht. Von dem Aufreihband 1 werden die in Reihe ankommenden Produkte 2 bei gleichbleibender Gurtgeschwindigkeit über die Steuerung des Bandrückzuges definiert auf das Portionierband 3 abgeworfen. In Abhängigkeit der Formatkonfiguration der Verpackungsmaschine (in Förderrichtung der Verpackungsmulden 18), können dies ein, zwei, drei oder mehr Abwurfpunkte sein, wobei es in dem vorliegenden Fall drei sind. Ein schneller Rückzugshub der Übergabekante 4 während des Erreichens der Abwurfposition bewirkt dabei eine Reduzierung des Kippeffektes während der parabelförmigen Flugbahn.
Das Portionierband 3 taktet um ein errechnetes Maß weiter, wenn von dem Aufreihband 1 eine Reihe von Produkten 2 an das Portionierband übergeben wurde. Dies bedeutet, dass der Gurtvorschub des zweiten Förderbandes 3 schrittweise erfolgt. Dieses Vorwärtstakten erzeugt dann die erforderliche Formatkonfiguration quer zur Transportrichtung der Verpackungsmaschine. Sobald ein Format vollständig abgelegt ist, taktet das Portionierband um ein anderes errechnetes Maß weiter und ein neues Format wird abgelegt. In dem vorliegenden Beispiel sind zwei Formate vollständig auf dem Portionierband abgelegt. Bei einem dritten Format wird gerade die erste Reihe abgelegt. Befinden sich die Produkte in der Übergabeposition zur Verpackungsmaschine, das heißt, genau über den offenen Packungen im Einlegebereich der Einlegestation 16 der Verpackungsmaschine, erfolgt bei stillstehendem Band ein schneller Rückzugshub, wodurch die Portionen senkrecht nach unten fallen. In der Zwischenzeit wird über das Aufreihband 1 eine neue Reihe von Produkten 2 an das Portionierband 3 übergeben. Noch bevor der nächste Bandvorschub einsetzt, fährt das zweite Portionierband 3 beziehungsweise das Bandende 15 wieder in die Ausgangslage zurück, bis sich nach weiteren Vorwärtstakten wieder Portionen in Abwurfposition befinden.
Die zuvor beschriebene Verpackungslinie hat dabei folgende Eigenschaften und Vorteile. In dem gewählten Ausführungsbeispiel sind beide Bänder als Rückzugs-/Shuttleband ausgelegt. Die beiden Förderbänder stehen rechtwinklig zueinander. Durch die Verwendung einer zentralen Steuerung und von Servoantrieben für die Bänder und für die Bandenden 4, 15 kann die Formatkonfiguration im Programm gespeichert werden, das heißt, eine Änderung der Formatteilung erfordert nur ein Umschalten auf ein anderes Programm, ohne dass dabei irgendwelche Bauteile der Verpackungslinie in ihrer Lage verändert werden müssen. Durch die Verwendung von Servoantrieben und unter Verwendung eines Detektionsmittels am Anfang des Aufreihbandes 1 ist es möglich den Weg und die Geschwindigkeit eines Produktes 2 bzw. einer Portion 6 genau zu berechnen und die Daten in der Steuerung zu hinterlegen. Die erfindungsgemäße Vorrichtung weiß demnach zu jedem Zeitpunkt wo sich das jeweilige Produkt 2 bzw. die jeweilige Portion 6 befindet und welche Geschwindigkeit sie momentan hat. Diese Informationen sind insbesondere für den Neustart der erfindungsgemäßen Vorrichtung nach einem betriebsbedingten Stopp wichtig, weil die erfindungsgemäße Vorrichtung automatisch wieder gestartet werden kann. Produkte, die sich nach dem Stopp auf der erfindungsgemäßen Vorrichtung befinden müssen nicht entfernt werden. Mit dem Detektionsmittel wird zumindest die Lage der Produkte 2 in Förderrichtung 11 ermittelt. Falls mit dem Detektionsmittel auch ein Versatz der Produkte relativ zur Mittenachse oder einer anderen beliebigen Längsachse des Aufreihbandes ermittelt wird, so kann diese Information verwendet werden um den Versatz mit einer entsprechenden Bewegung des Portionierbandes auszugleichen, so dass auf dem Portionierband das gewünschte Portionsbild bzw. die gewünschte Formatkonfiguration erzeugt wird.
Die gewählten Anordnung der Bänder 1, 3 zueinander, die Verwendung von Servoantrieben sowie die Abstimmung der Lage der Übergabekante 4 relativ zu dem Portionierband und der Bewegung des Portionierbandes 3 relativ zu der Übergabekante 4 erlaubt die Erstellung beliebiger Portionsbilder 6 und Formatkonfigurationen 5, die beispielhaft in den Figuren 11 - 19 dargestellt sind. Der Abstand zwischen den Produkten 2 auf dem Aufreihband kann variieren.

In den **Figuren 11 -19** sind Portionen und Formate dargestellt, die mit der erfindungsgemäßen Vorrichtung erzeugbar sind. Die Auflistung ist beispielhaft und nicht einschränkend zu verstehen.

**Figur 11** zeigt sechs Portionen 6 in einer gleichmäßigen Reihe. Es sind zwei Reihen dargestellt. Die Portionen 6 werden in der durch den Pfeil 14 dargestellten Richtung auf dem Portionierband (nicht dargestellt) transportiert. Das Format kann ein- oder zweireihig sein; d.h. es werden entweder eine oder zwei Reihen während eines Taktes in der Einlegestation einer Verpackungsmaschine abgelegt.

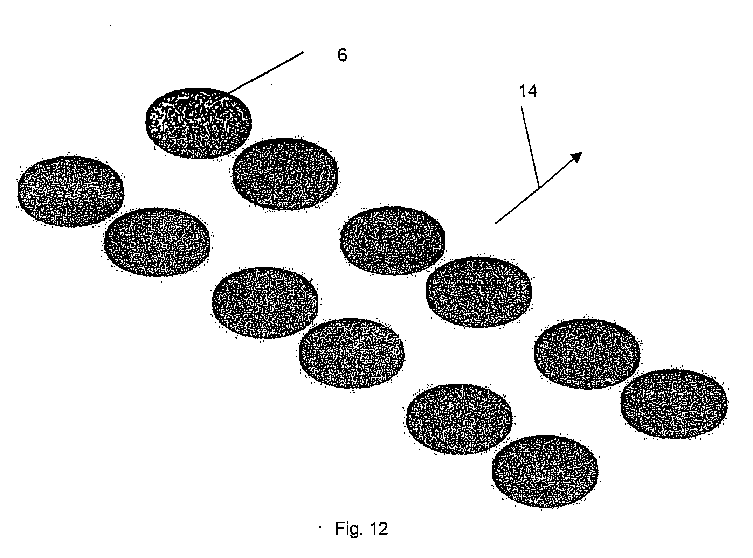

**Figur 12** zeigt drei Portionen 6 in einer ungleichmäßigen Reihe. Es sind zwei Reihen dargestellt. Die Portionen 6 werden in der durch den Pfeil 14 dargestellten Richtung auf dem Portionierband (nicht dargestellt) transportiert. Das Format kann ein- oder zweireihig sein; d.h. es werden entweder eine oder zwei Reihen während eines Taktes in der Einlegestation einer Verpackungsmaschine abgelegt.

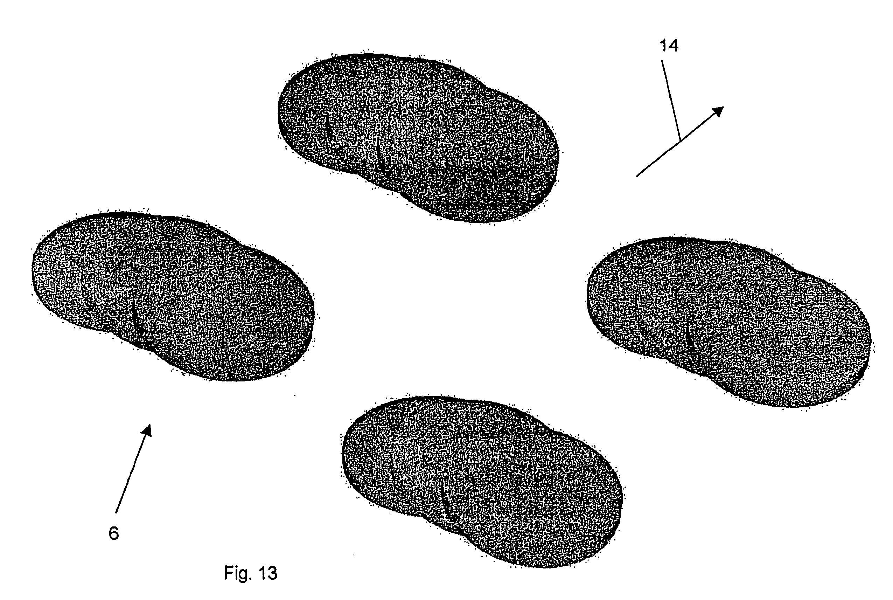

**Figur 13** zeigt zwei nach vorne geschindelte Portionen 6 in einer Reihe. Mit der in Figur 10 dargestellten Vorrichtung wird eine Reihe erzeugt, in dem der Portionsaufbau von links nach rechts bzw. bezogen auf die Transportrichtung des Aufreihbandes von hinten nach vorne erfolgt. Das Portionierband steht während dessen still. Es sind zwei Reihen dargestellt. Die Portionen 6 werden in der durch den Pfeil 14 dargestellten Richtung auf dem Portionierband (nicht dargestellt) transportiert. Das Format kann ein- oder zweireihig sein; d.h. es werden entweder eine oder zwei Reihen während eines Taktes in der Einlegestation einer Verpackungsmaschine abgelegt.

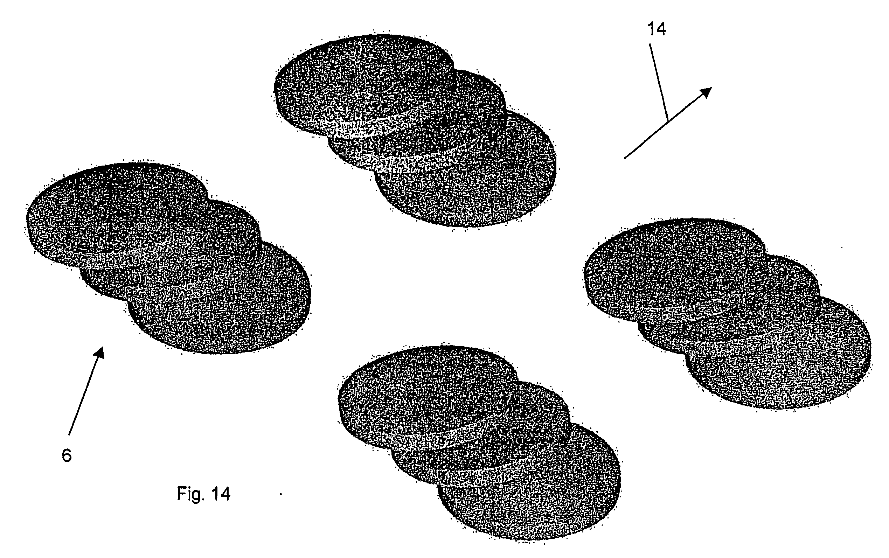

**Figur 14** zeigt zwei nach hinten geschindelte Portionen 6 in einer Reihe. Mit der in Figur 10 dargestellten Vorrichtung wird eine Reihe erzeugt, in dem der Portionsaufbau von rechts nach links bzw. bezogen auf die Transportrichtung 11 des Aufreihbandes von vorne nach hinten erfolgt. Das Portionierband steht während dessen still. Es sind zwei Reihen dargestellt. Die Portionen 6 werden in der durch den Pfeil 14 dargestellten Richtung auf dem Portionierband (nicht dargestellt) transportiert. Das Format kann ein- oder zweireihig sein; d.h. es werden entweder eine oder zwei Reihen während eines Taktes in der Einlegestation einer Verpackungsmaschine abgelegt.

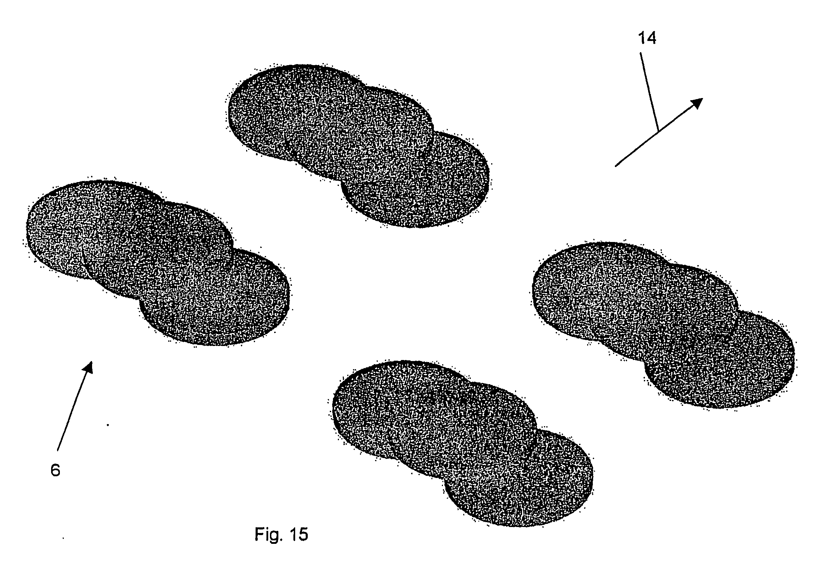

**Figur 15** zeigt zwei terrassenförmig angeordnete Portionen 6 in einer Reihe. Mit der in Figur 10 dargestellten Vorrichtung wird eine Reihe erzeugt, in dem jeweils erst die zwei unten liegenden Produkte abgelegt und dann jeweils ein Produkt darauf gelegt wird. Das Portionierband steht während der Ablage einer Reihe still. Es sind zwei Reihen dargestellt. Die Portionen 6 werden in der durch den Pfeil 14 dargestellten Richtung auf dem Portionierband (nicht dargestellt) transportiert. Das Format kann ein- oder zweireihig sein; d.h. es werden entweder eine oder zwei Reihen während eines Taktes in der Einlegestation einer Verpackungsmaschine abgelegt.

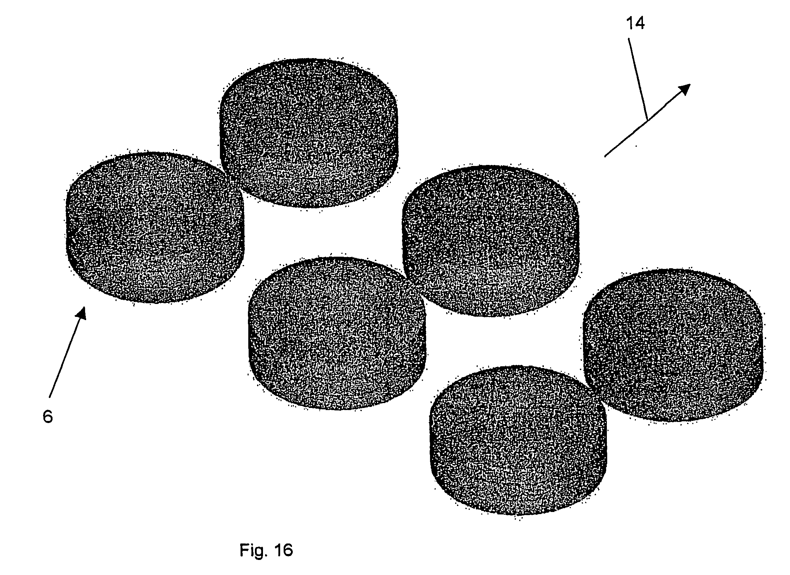

**Figur 16** zeigt drei gestapelte Portionen 6 in einer Reihe. Mit der in Figur 10 dargestellten Vorrichtung wird ein Stapel 6 erzeugt, in dem jeweils drei Produkte 2 an einem Ort auf dem Portionierband abgelegt werden. Das Portionierband steht während der Ablage einer Reihe still. Es sind zwei Reihen dargestellt. Die Portionen 6 werden in der durch den Pfeil 14 dargestellten Richtung auf dem Portionierband (nicht dargestellt) transportiert. Das Format kann ein- oder zweireihig sein; d.h. es werden entweder eine oder zwei Reihen während eines Taktes in der Einlegestation einer Verpackungsmaschine abgelegt.

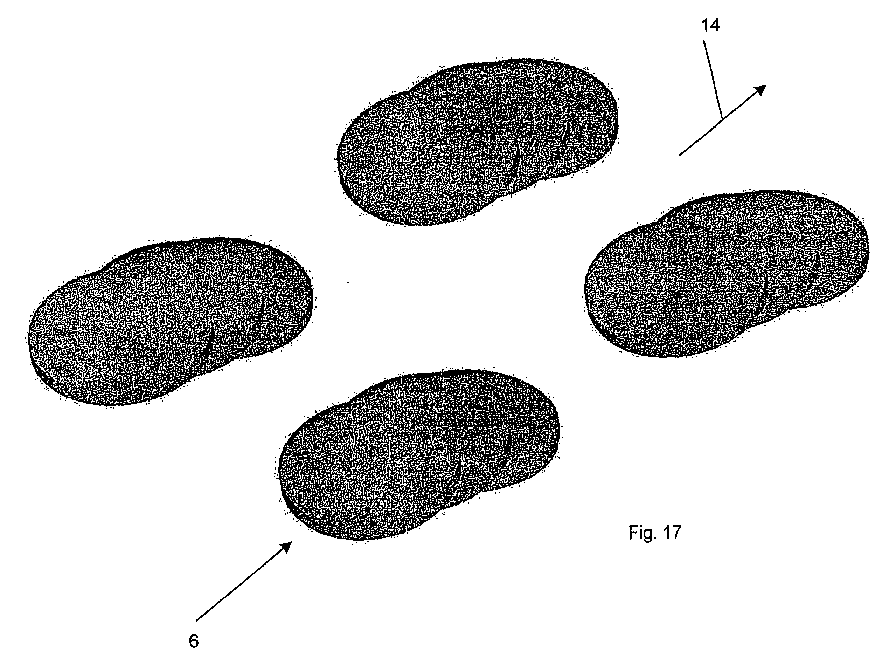

**Figur 17** zeigt zwei quergeschindelte Portionen 6 in einer Reihe. Mit der in Figur 10 dargestellten Vorrichtung wird eine Portion 6 erzeugt, in dem jeweils drei Produkte 2 an einem Ort auf dem Portionierband abgelegt werden. Das Portionierband transportiert das gerade abgelegte Produkt um einen Takt weiter, bevor das nächste Produkt abgelegt wird, wobei die beiden Portionen 6 einer Reihe jedoch vorzugsweise parallel erstellt werden. Es sind zwei Reihen dargestellt. Die Portionen 6 werden in der durch den Pfeil 14 dargestellten Richtung auf dem Portionierband (nicht dargestellt) transportiert. Das Format kann ein- oder zweireihig sein; d.h. es werden entweder eine oder zwei Reihen während eines Taktes in der Einlegestation einer Verpackungsmaschine abgelegt.

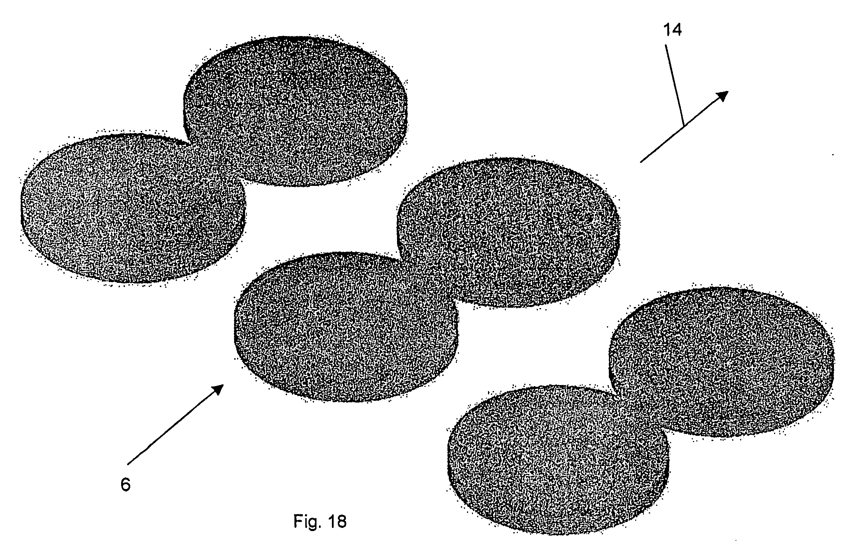

**Figur 18** zeigt drei quergeschindelte Portionen 6 ohne Überlappung in einer Reihe. Mit der in Figur 10 dargestellten Vorrichtung wird eine Portion 6 erzeugt, in dem ein Produkt 2 auf dem Portionierband abgelegt wird. Das Portionierband transportiert das gerade abgelegte Produkt um einen Takt weiter, bevor das nächste Produkt abgelegt wird, wobei die drei Portionen 6 einer Reihe jedoch vorzugsweise parallel erstellt werden. Es ist eine Reihe dargestellt. Die Portionen 6 werden in der durch den Pfeil 14 dargestellten Richtung auf dem Portionierband (nicht dargestellt) transportiert.

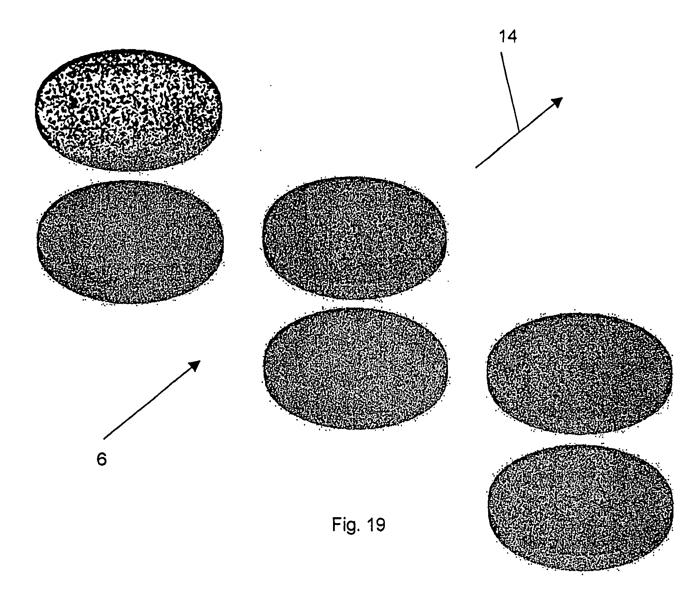

**Figur 19** zeigt drei versetzt angeordnete Portionen 6 ohne Überlappung in einer Reihe. Mit der in Figur 10 dargestellten Vorrichtung wird eine Portion 6 erzeugt, in dem ein Produkt 2 auf dem Portionierband abgelegt wird. Das Portionierband transportiert das gerade abgelegte Produkt um einen Takt weiter, bevor das nächste Produkt abgelegt wird, wobei die drei Portionen 6 einer Reihe jedoch vorzugsweise parallel erstellt werden. Es ist eine Reihe dargestellt. Die Portionen 6 werden in der durch den Pfeil 14 dargestellten Richtung auf dem Portionierband (nicht dargestellt) transportiert.

## Patentansprüche

1. Vorrichtung zur Erzeugung beliebiger Portionen (6) und Formate (5) von Produkten (2), mit einem Aufreihband (1), das die Produkte (2) fördert und an einer Übergabekante (4) an ein Portionierband (3) übergibt, auf dem die Portionen (6) und die Formate (5) erzeugt werden und mit dem die Produkte als entsprechende Portionen (6) und in dem jeweiligen Format (5) weiter gefördert werden, bei dem
- die Lage der Übergabekante (4) relativ zum Portionierband (3) mindestens in einer Richtung (7, 8) mit einem Antrieb veränderbar ist und/oder
- die Lage des Portionierbandes (3) mindestens in einer Richtung (9, 10) relativ zur Übergabekante mit einem Antrieb veränderbar ist,
- die Lage der Übergabekante (4) und die Bewegung des Portionierbandes (3) so aufeinander abgestimmt ist, dass mit den Produkten beliebige Portionen (6) und Formate (5) erzeugbar sind,
- sie ein Detektionsmittel aufweist, das erste Daten über die Lage des jeweiligen Produktes auf dem Aufreihband (1) an eine Steuerung übermittelt, die außerdem zweite Daten von den Antrieben empfängt und
- die Steuerung die Antriebe entsprechend der gewünschten Portionen und Formate regelt,
**dadurch gekennzeichnet, dass** mit den Daten der genaue Ort des jeweiligen Produktes innerhalb der Vorrichtung berechenbar ist.

2. Vorrichtung nach Anspruch 1, **dadurch gekennzeichnet, dass** die Lage der Übergabekante (4) in und gegen die Förderrichtung (11) des Aufreihbandes (1) veränderbar ist, dass das Portionierband (3) relativ zu der Übergabekante (4) in einer Richtung (10) beweglich ist und dass der Winkel zwischen der Förderrichtung (11) und der Bewegungsrichtung (10) des Portionierbandes vorzugsweise 90° oder 270° beträgt.

3. Vorrichtung nach Anspruch 1, **dadurch gekennzeichnet, dass** die Lage der Übergabekante (4) in Förderrichtung (11) und quer zur Förderrichtung (11) des Aufreihbandes (1) beliebig veränderbar ist.

4. Vorrichtung nach Anspruch 1, **dadurch gekennzeichnet, dass** das Portionierband (3) mindestens in zwei vorzugsweise senkrecht aufeinander stehenden Richtungen (9, 10) beweglich ausgebildet ist.

5. Vorrichtung nach Anspruch 1, **dadurch gekennzeichnet, dass** die Lage der Übergabekante (4) in und gegen die Förderrichtung (11) des Aufreihbandes (1) veränderbar ist und dass sie ein Mittel (12) aufweist, mit dem die Produkte auf dem Aufreihband (1) relativ zur Mittenspur (13) aufreihbar sind.

6. Vorrichtung nach einem der voranstehenden Ansprüche, **dadurch gekennzeichnet, dass** es mehrere Aufreihbänder (1) und/oder mehrere Portionierbänder (3) aufweist.

7. Vorrichtung nach Anspruch 6, **dadurch gekennzeichnet, dass** die Förderrichtung (11, 14) der Aufreihbänder (1) und/oder der Portionierbänder (3) gleichgerichtet und/oder gegenläufig ist.

8. Vorrichtung nach einem der voranstehenden Ansprüche, **dadurch gekennzeichnet, dass** die Übergabekante (4) an dem Aufreihband (1) verschieblich gelagert ist und die Verschiebung vorzugsweise durch einen Servomotor erfolgt.

9. Vorrichtung nach einem der voranstehenden Ansprüche, dass das Ende (15) des Portionierbandes (3) verschieblich gelagert ist und die Verschiebung vorzugsweise durch einen Servomotor erfolgt.

10. Vorrichtung nach einem der vorherstehenden Ansprüche, **dadurch gekennzeichnet, dass** der Antrieb des Aufreihbandes (1) und/oder des Portionierbandes (3) durch einen Servomotor erfolgt.

11. Vorrichtung nach einem der voranstehenden Ansprüche, **dadurch gekennzeichnet, dass** die gewünschten Portionsbilder und die Formate frei programmierbar und hinterlegbar sind.

12. Vorrichtung nach einem der voranstehenden Ansprüche, **dadurch gekennzeichnet, dass** die Geschwindigkeit des Aufreihbandes konstant ist.

13. Vorrichtung nach einem der voranstehenden Ansprüche, **dadurch gekennzeichnet, dass** das Portionierband auch Einlegeband ist.

14. System bestehend aus einer Vorrichtung nach einem der Ansprüche 1-13 und einer Verpackungsmaschine (16), wobei das Portionierband (3) auch ein Einlegeband ist, das die Portionen in Verpackungsmulden einlegt, die entlang der Verpackungsmaschine taktweise gefördert werden.

15. System nach Anspruch 14, **dadurch gekennzeichnet, dass** das Portionierband (3) in einem rechten Winkel zu der Verpackungsmaschine (16) angeordnet ist.

16. System nach Anspruch 14 oder 15, **dadurch gekennzeichnet, dass** das Aufreihband rechtwinklig zu dem Portionierband (3) angeordnet ist.

17. System nach einem der Ansprüche 14 - 16, **dadurch gekennzeichnet, dass** die Vorrichtung auf den Takt der Verpackungsmaschine abgestimmt ist.

18. Verfahren zur Erzeugung beliebiger Portionen (6) und Formate (5) von Produkten (2), mit einer Vorrichtung gemäß der Ansprüche 1 - 13, **dadurch gekennzeichnet, dass** die Produkte mit demselben Portionierband (3) taktweise, bei stillstehendem Portionierband, in eine Verpackung eingelegt werden.

19. Verfahren nach Anspruch 18, **dadurch gekennzeichnet, dass** die Lage der Übergabekante (4) in und gegen die Förderrichtung (11) des Aufreihbandes (1) verändert wird, dass das Portionierband (3) relativ zu der Übergabekante (4) in einer Richtung (10) bewegt wird und dass der Winkel zwischen der Förderrichtung (11) und der Bewegungsrichtung (10) des Portionierbandes vorzugsweise 90° oder 270° beträgt.

20. Verfahren nach Anspruch 18, **dadurch gekennzeichnet, dass** die Lage der Übergabekante (4) in Förderrichtung (11) und quer zur Förderrichtung (11) des Aufreihbandes (1) beliebig verändert wird.

21. Verfahren nach Anspruch 18, **dadurch gekennzeichnet, dass** das Portionierband (3) mindestens in zwei vorzugsweise senkrecht aufeinander stehenden Richtungen (9, 10) bewegt wird.

22. Verfahren nach Anspruch 18, **dadurch gekennzeichnet, dass** die Lage der Übergabekante (4) in Förderrichtung (11) des Aufreihbandes (1) verändert wird und dass die Produkte auf dem Aufreihband (1) jeweils in einer bestimmten Lage relativ zur Mittenspur (13) auf dem Aufreihband positioniert werden.

23. Verfahren nach einem der Ansprüche 18 - 22, **dadurch gekennzeichnet, dass** die Verschiebung der Übergabekante (4) relativ zu dem Aufreihband (1) vorzugsweise durch einen Servomotor erfolgt.

24. Verfahren nach einem der Ansprüche 18 - 23, **dadurch gekennzeichnet, dass** die Lage der Produkte auf dem Aufreihband (1) zumindest in Förderrichtung (11) mit einem einzigen Detektionsmittel erfasst wird.

25. Verfahren nach einem der Ansprüche 18 - 24, **dadurch gekennzeichnet, dass** es von einer Steuerung gesteuert wird, in der zumindest ein Maß für die Taktung des Portionierbandes hinterlegt ist.

26. Verfahren nach Anspruch 25, **dadurch gekennzeichnet, dass** die Steuerung dann ein Signal an den Antrieb des Portionierbandes zur Taktung erzeugt, wenn die Reihe des Formates vollständig ist.

27. Verfahren nach einem der Ansprüche 18 - 26, **dadurch gekennzeichnet, dass** die Geschwindigkeit des Aufreihbandes konstant ist.

## Claims

1. Device for producing any portions (6) and formats (5) of products (2), with a lining-up belt (1) which conveys the products (2) and at a transfer edge (4) transfers them to a portioning belt (3) on which the portions (6) and the formats (5) are produced and by which the products are conveyed further as corresponding portions (6) and in the format (5) concerned, in which
- the position of the transfer edge (4) can be varied relative to the portioning belt (3) at least in one direction (7, 8) by a drive and/or
- the position of the portioning belt (3) can be varied relative to the transfer edge at least in one direction (9, 10) by a drive,
- the position of the transfer edge (4) and the movement of the portioning belt (3) are coordinated with one another in such a way that any portions (6) and formats (5) can be produced with the products,
- it has a detection means which transmits first data about the position of the product concerned on the lining-up belt (1) to a control which moreover receives second data from the drives and
- the control regulates the drives according to the desired portions and formats,
**characterized in that** the precise location of the product concerned within the device can be calculated with the data.

2. Device according to Claim 1, **characterized in that** the position of the transfer edge (4) can be varied in and counter to the conveying direction (11) of the lining-up belt (1), **in that** the portioning belt (3) is movable relative to the transfer edge (4) in one direction (10) and **in that** the angle between the conveying direction (11) and the movement direction (10) of the portioning belt is preferably 90° or 270°.

3. Device according to Claim 1, **characterized in that** the position of the transfer edge (4) can be varied as desired in the conveying direction (11) and transversely to the conveying direction (11) of the lining-up belt (1).

4. Device according to Claim 1, **characterized in that** the portioning belt (3) is designed to be movable at least in two directions (9, 10) preferably at right angles to one another.

5. Device according to Claim 1, **characterized in that** the position of the transfer edge (4) can be varied in and counter to the conveying direction (11) of the lining-up belt (1) and **in that** it has a means (12) by which the products can be lined up on the lining-up belt (1) relative to the central track (13).

6. Device according to one of the preceding claims, **characterized in that** it has a number of lining-up belts (1) and/or a number of portioning belts (3).

7. Device according to Claim 6, **characterized in that** the conveying direction (11, 14) of the lining-up belts (1) and/or of the portioning belts (3) is in the same direction and/or in opposite directions.

8. Device according to one of the preceding claims, **characterized in that** the transfer edge (4) is mounted displaceably on the lining-up belt (1) and the displacement is preferably effected by a servomotor.

9. Device according to one of the preceding claims, **characterized in that** the end (15) of the portioning belt (3) is mounted displaceably and the displacement is preferably effected by a servomotor.

10. Device according to one of the preceding claims, **characterized in that** the drive of the lining-up belt (1) and/or of the portioning belt (3) is effected by a servomotor.

11. Device according to one of the preceding claims, **characterized in that** the desired portion configurations and the formats are freely programmable and storable.

12. Device according to one of the preceding claims, **characterized in that** the speed of the lining-up belt is constant.

13. Device according to one of the preceding claims, **characterized in that** the portioning belt is also an insertion belt.

14. System consisting of a device according to one of Claims 1-13 and a packaging machine (16), the portioning belt (3) also being an insertion belt which inserts the portions into packaging trays which are conveyed stepwise along the packaging machine.

15. System according to Claim 14, **characterized in that** the portioning belt (3) is arranged at right angles to the packaging machine (16).

16. System according to Claim 14 or 15, **characterized in that** the lining-up belt is arranged at right angles to the portioning belt (3).

17. System according to one of Claims 14-16, **characterized in that** the device is synchronized with the rate of the packaging machine.

18. Method for producing any portions (6) and formats (5) of products (2), with a device according to Claims 1-13, **characterized in that** the products are inserted stepwise into a packaging by the same portioning belt (3), with the portioning belt stationary.

19. Method according to Claim 18, **characterized in that** the position of the transfer edge (4) is varied in and counter to the conveying direction (11) of the lining-up belt (1), **in that** the portioning belt (3) is moved relative to the transfer edge (4) in one direction (10) and **in that** the angle between the conveying direction (11) and the movement direction (10) of the portioning belt is preferably 90° or 270°.

20. Method according to Claim 18, **characterized in that** the position of the transfer edge (4) is varied as desired in the conveying direction (11) and transversely to the conveying direction (11) of the lining-up belt (1).

21. Method according to Claim 18, **characterized in that** the portioning belt (3) is moved at least in two directions (9, 10) preferably at right angles to one another.

22. Method according to Claim 18, **characterized in that** the position of the transfer edge (4) is varied in the conveying direction (11) of the lining-up belt (1) and **in that** the products on the lining-up belt (1) are in each case positioned on the lining-up belt in a given position relative to the central track (13).

23. Method according to one of Claims 18-22, **characterized in that** the displacement of the transfer edge (4) relative to the lining-up belt (1) is preferably effected by a servomotor.

24. Method according to one of Claims 18-23, **characterized in that** the position of the products on the lining-up belt (1) is detected at least in the conveying direction (11) by a single detection means.

25. Method according to one of Claims 18-24, **characterized in that** it is controlled by a control in which at least a measure for the stepping of the portioning belt is stored.

26. Method according to Claim 25, **characterized in that** the control generates a signal to the drive of the portioning belt for stepping when the row of the format is complete.

27. Method according to one of Claims 18-26, **characterized in that** the speed of the lining-up belt is constant.

## Revendications

1. Dispositif pour produire des portions (6) et des formats (5) quelconques de produits (2), comprenant une bande d'alignement (1) qui transporte les produits (2) et les transfère au niveau d'un bord de transfert (4) à une bande de portionnement (3) sur laquelle les portions (6) et les formats (5) sont produits, et avec laquelle les produits sont ensuite transportés sous forme de portions correspondantes (6) et dans le format respectif (5),
- la position du bord de transfert (4) par rapport à la bande de portionnement (3) pouvant être modifiée au moins dans une direction (7, 8) avec un entraînement, et/ou
- la position de la bande de portionnement (3) pouvant être modifiée au moins dans une direction (9, 10) par rapport au bord de transfert avec un entraînement,
- la position du bord de transfert (4) et le mouvement de la bande de portionnement (3) étant adaptés l'un à l'autre de telle sorte que l'on puisse produire avec les produits des portions (6) et des formats (5) quelconques,
- le dispositif présentant un moyen de détection qui communique des premières données concernant la position du produit respectif sur la bande d'alignement (1) à une commande qui reçoit en outre des deuxièmes données des entraînements et
- la commande régulant les entraînements en fonction des portions et des formats souhaités,
**caractérisé en ce que** l'on peut calculer à l'aide des données la situation précise du produit respectif à l'intérieur du dispositif.

2. Dispositif selon la revendication 1, **caractérisé en ce que** la position du bord de transfert (4) peut être modifiée dans la direction de transport (11) de la bande d'alignement (1) et dans la direction opposée, **en ce que** la bande de portionnement (3) peut être déplacée par rapport au bord de transfert (4) dans une direction (10) et **en ce que** l'angle entre la direction de transport (11) et la direction de déplacement (10) de la bande de portionnement est de préférence de 90° ou de 270°.

3. Dispositif selon la revendication 1, **caractérisé en ce que** la position du bord de transfert (4) peut être modifiée de manière quelconque dans la direction de transport (11) et transversalement à la direction de transport (11) de la bande d'alignement (1).

4. Dispositif selon la revendication 1, **caractérisé en ce que** la bande de portionnement (3) est réalisée de manière déplaçable dans au moins deux directions (9, 10) de préférence perpendiculaires l'une à l'autre.

5. Dispositif selon la revendication 1, **caractérisé en ce que** la position du bord de transfert (4) peut être modifiée dans la direction de transport (11) de la bande d'alignement (1) et dans la direction opposée, et **en ce qu'**il présente un moyen (12) avec lequel les produits peuvent être alignés par rapport à la trace centrale (13) sur la bande d'alignement (1).

6. Dispositif selon l'une quelconque des revendications précédentes, **caractérisé en ce qu'**il présente plusieurs bandes d'alignement (1) et/ou plusieurs bandes de portionnement (3).

7. Dispositif selon la revendication 6, **caractérisé en ce que** la direction de transport (11, 14) des bandes d'alignement (1) et/ou des bandes de portionnement (3) est identique et/ou opposée.

8. Dispositif selon l'une quelconque des revendications précédentes, **caractérisé en ce que** le bord de transfert (4) est monté de manière déplaçable sur la bande d'alignement (1) et le déplacement s'effectue de préférence par le biais d'un servomoteur.

9. Dispositif selon l'une quelconque des revendications précédentes, **caractérisé en ce que** l'extrémité (15) de la bande de portionnement (3) est montée de manière déplaçable et le déplacement s'effectue de préférence par le biais d'un servomoteur.

10. Dispositif selon l'une quelconque des revendications précédentes, **caractérisé en ce que** l'entraînement de la bande d'alignement (1) et/ou de la bande de portionnement (3) s'effectue par le biais d'un servomoteur.

11. Dispositif selon l'une quelconque des revendications précédentes, **caractérisé en ce que** les motifs de portions et les formats souhaités peuvent être programmés et déposés librement.

12. Dispositif selon l'une quelconque des revendications précédentes, **caractérisé en ce que** la vitesse de la bande d'alignement est constante.

13. Dispositif selon l'une quelconque des revendications précédentes, **caractérisé en ce que** la bande de portionnement est également une bande d'introduction.

14. Système constitué d'un dispositif selon l'une quelconque des revendications 1 à 13 et d'une machine d'emballage (16), la bande de portionnement (3) étant également une bande d'introduction qui introduit les portions dans des cavités d'emballage qui sont transportées de manière cadencée le long de la machine d'emballage.

15. Système selon la revendication 14, **caractérisé en ce que** la bande de portionnement (3) est disposée à angle droit par rapport à la machine d'emballage (16).

16. Système selon la revendication 14 ou 15, **caractérisé en ce que** la bande d'alignement est disposée à angle droit par rapport à la bande de portionnement (3).

17. Système selon l'une quelconque des revendications 14 à 16, **caractérisé en ce que** le dispositif est adapté à la cadence de la machine d'emballage.

18. Procédé de production de portions (6) et de formats (5) quelconques de produits (2), comprenant un dispositif selon les revendications 1 à 13, **caractérisé en ce que** les produits avec la même bande de portionnement (3) sont introduits dans un emballage de manière cadencée, avec la bande de portionnement à l'arrêt.

19. Procédé selon la revendication 18, **caractérisé en ce que** la position du bord de transfert (4) est modifiée dans la direction de transport (11) de la bande d'alignement (1) et dans la direction opposée, **en ce que** la bande de portionnement (3) est déplacée par rapport au bord de transfert (4) dans une direction (10) et **en ce que** l'angle entre la direction de transport (11) et la direction de déplacement (10) de la bande de portionnement est de préférence de 90° ou de 270°.

20. Procédé selon la revendication 18, **caractérisé en ce que** la position du bord de transfert (4) est modifiée de manière quelconque dans la direction de transport (11) et transversalement à la direction de transport (11) de la bande d'alignement (1).

21. Procédé selon la revendication 18, **caractérisé en ce que** la bande de portionnement (3) est déplacée au moins dans deux directions (9, 10) de préférence perpendiculaires l'une à l'autre.

22. Procédé selon la revendication 18, **caractérisé en ce que** la position du bord de transfert (4) est modifiée dans la direction de transport (11) de la bande d'alignement (1) et **en ce que** les produits sont positionnés sur la bande d'alignement (1) à chaque fois dans une position déterminée par rapport à la trace centrale (13) sur la bande d'alignement.

23. Procédé selon l'une quelconque des revendications 18 à 22, **caractérisé en ce que** le déplacement du bord de transfert (4) par rapport à la bande d'alignement (1) s'effectue de préférence par le biais d'un servomoteur.

24. Procédé selon l'une quelconque des revendications 18 à 23, **caractérisé en ce que** la position des produits sur la bande d'alignement (1) est détectée au moins dans la direction de transport (11) avec un moyen de détection unique.

25. Procédé selon l'une quelconque des revendications 18 à 24, **caractérisé en ce qu'**il est commandé par une commande dans laquelle est déposée au moins une mesure du cadençage de la bande de portionnement.

26. Procédé selon la revendication 25, **caractérisé en ce que** la commande produit alors un signal à l'entraînement de la bande de portionnement en vue du cadençage, lorsque la série du format est complète.

27. Procédé selon l'une quelconque des revendications 18 à 26, **caractérisé en ce que** la vitesse de la bande d'alignement est constante.
